# EUROPEAN PATENT APPLICATION

(11) **EP 4 528 466 A1**
(43) Date of publication of application: **26.03.2025**
(21) Application number: 23822687.2
(22) Date of filing: 07.03.2023
(51) Int. Cl.: G06F 3/06

(54) **DATA MIGRATION METHOD AND RELATED APPARATUS**

(30) Priority: 13.06.2022 CN 202210678199; 09.09.2022 CN 202211102393
(71) Applicant: Huawei Technologies Co., Ltd., Shenzhen, Guangdong 518129 (CN)
(72) Inventor: SU, Yi, Shenzhen, Guangdong 518129 (CN); LAN, Longwen, Shenzhen, Guangdong 518129 (CN); ZHOU, Wen, Shenzhen, Guangdong 518129 (CN); CHENG, Zhen, Shenzhen, Guangdong 518129 (CN); FANG, Wei, Shenzhen, Guangdong 518129 (CN); HU, Gang, Shenzhen, Guangdong 518129 (CN); XIAO, Yaowen, Shenzhen, Guangdong 518129 (CN)
(74) Representative: Isarpatent
(86) International application number: PCT/CN2023/080091
(87) International publication number: WO 2023/241115

(57) **Abstract**

A data migration method and a related apparatus are provided. A migration scheduling apparatus determines a migration task of migrating data of a first file from a source device to a destination device, and performs a first change on metadata of the first file, to trigger the source device or the destination device to complete the migration task based on the first change performed on the metadata of the first file. In this method, migration for data of a file is triggered based on a change (for example, a change for metadata like ownership and a storage layout of the file) of the metadata of the file. In addition, migration progress of the data of the file can also be reflected by using a status of the metadata of the file. According to this method, data migration efficiency can be improved, convenience in data use and management can be improved, and devices are decoupled in a migration process, to greatly improve flexibility and scalability of a service system.

## Description

### TECHNICAL FIELD

This application relates to the fields of information technologies (information technologies, ITs) and storage technologies, and in particular, to a data migration method and a related apparatus.

### BACKGROUND

As a scale of a user service increases, a single storage device cannot meet a service requirement, and data of the user service may be stored in a plurality of storage devices. Services of some users are in a wide range, and may relate to storage devices in different regions or different data centers. In this case, data migration is often involved in a service running process. For example, a storage device A has a smaller capacity but high storage performance, and a storage device B has a larger capacity but poor storage performance. Therefore, when a requirement of a service on access performance of a piece of data (for example, DATA 1) stored in the device A is lowered, the data DATA 1 may be stored in the device B through a migration operation, to achieve optimal overall storage costs.

Currently, data tiering methods mainly include a tiering method based on an intermediate device and a migration method based on a replication technology. In the first method, an external migration controller needs to be introduced, and the migration controller reads data from a source device and writes the data to a destination device. In the second method, a two-way channel is established between a source device and a destination device, and the source device controls and performs a process of writing data to the destination device. It can be learned that, in both the foregoing two methods, mutual sensing between devices needs to be implemented before migration. In the first method, a migration device needs to establish a connection and access security control with the source device and the destination device. In the second method, a connection and access security control need to be established between the source device and the destination device. Mutual sensing and security control between the devices are required. Therefore, a data migration procedure is complex. As a result, data migration efficiency is low, and normal use of data by a user is likely to be affected.

### SUMMARY

Embodiments of this application provide a data migration method and apparatus, to implement status-based data migration, improve data migration efficiency, and improve convenience in data use and management for a user.

According to a first aspect, an embodiment of this application provides a data migration method. The method includes:
determining a migration task for a first file, where data of the first file is stored in a first storage device, and the migration task for the first file indicates to migrate the data of the first file from the first storage device to a second storage device; and
performing a first change on metadata of the first file, to trigger execution of the migration task for the first file, where the first change indicates to change, from the first storage device to the second storage device, a storage device to which the first file belongs.

Optionally, the foregoing method is implemented by a migration scheduling apparatus.

In embodiments of this application, a migration operation for the file is triggered by changing the metadata of the file. When the file belongs to the second storage device but the data of the file is still stored in the first storage device, the first file is migrated from the first storage device to the second storage device. In this manner, data migration can be triggered based on a file status (for example, attribute status like file ownership and a file storage layout). When a device has a capability of changing the metadata of the file, the file status can be changed to trigger a migration process, and security control of data access between the first storage device and the second storage device does not need to be established for migration. This simplifies a security control procedure of data migration, improves data migration efficiency, and improves convenience in data use and management for a user. Especially for a service that includes a plurality of storage devices or a plurality of data centers, functions of the devices can be further decoupled through status-based data migration, to greatly improve flexibility and scalability of a service system.

In addition, when the method is used for migration, a storage location of the data of the file is still indicated by storage layout information. Therefore, the foregoing data migration method may not affect normal use of the data of the file by the user, to improve stability of the service system.

In a possible implementation of the first aspect, the metadata of the first file includes ownership information of the first file and storage layout information of the first file. Before the first change is performed, a storage device indicated by the ownership information of the first file is the first storage device, and the storage layout information of the first file indicates that a storage device storing the first file includes the first storage device and does not include the second storage device.

Optionally, the ownership information of the first file is an identifier of the first storage device. The storage layout information of the first file includes the identifier of the first storage device and does not include an identifier of the second storage device.

In another possible implementation of the first aspect, the performing a first change on metadata of the first file includes:
changing the ownership information of the first file from the identifier of the first storage device to the identifier of the second storage device.

In still another possible implementation of the first aspect, the migration task for the first file includes an identifier of the first file, the identifier of the first storage device, and the identifier of the second storage device.

In still another possible implementation of the first aspect, the first file belongs to a target file system. The metadata of the first file is included in metadata of the target file system. The metadata of the target file system is synchronized between a plurality of devices.

Synchronization between the plurality of devices means that any one of the plurality of devices may make a modification, modified content can be learned by the plurality of devices, and metadata of the target system learned by the plurality of devices is consistent.

The plurality of devices includes a first computing device and a second computing device. The first computing device is located in the first storage device or is connected to the first storage device. The second computing device is located in the second storage device or is connected to the second storage device.

In this implementation, the metadata of the target file system is synchronized between the plurality of devices. Therefore, when the metadata of the first file is changed, the plurality of devices all can read the change of the metadata of the file system. In this way, the first computing device and the second computing device can trigger a migration operation based on the change of the metadata.

For example, a source device may synchronize metadata of a file system, to know the change of the ownership information of the first file, so as to trigger a push operation on the data of the first file.

For example, a destination device may synchronize the metadata of the file system, to know the change of the ownership information of the first file, so as to trigger a pull operation on the data of the first file.

In addition, the metadata of the target file system is synchronized between the plurality of devices. In this way, the plurality of devices can use consistent metadata to represent a hierarchy of the target file system and information about the file (and/or a directory). This can conveniently implement union and interworking of a file system, and facilitate management of the file system.

Further, the plurality of devices may further include the migration scheduling apparatus.

In still another possible implementation of the first aspect, after the performing a first change on metadata of the first file, the method further includes:
sending a first notification, where the first notification indicates that the metadata of the first file is changed, so that the first computing device or the second computing device obtains, based on the first notification, metadata that is of the first file and that is obtained through the first change, and executes the migration task for the first file based on the metadata that is of the first file and that is obtained through the first change.

Optionally, the first notification indicates which changes occur in the metadata of the first file. For example, the first notification may include content of the first change, for example, the identifier of the first file and an attribute (or a value of an attribute) that is of the file and that is changed through a second change. In this case, the first computing device and the second computing device may obtain, based on the metadata that is of the first file and that exists before the first change and the content of the first change, the metadata that is of the first file and that is obtained through the first change, and execute the migration task based on the metadata that is of the first file and that is obtained through the first change. For another example, the first notification may include the metadata that is of the first file and that is obtained through the first change. In this case, the first computing device and the second computing device may execute the migration task based on the metadata that is of the first file and that is obtained through the first change.

Optionally, the first notification indicates that the first change occurs, but does not include specific content of the change and the metadata that is of the first file and that is obtained through the first change. In this case, the first computing device and/or the second computing device may request, from the migration scheduling apparatus in response to the first notification, the metadata that is of the first file and that is obtained through the first change, and execute the migration task based on the metadata, that is of the first file and that is obtained through the first change, provided by the migration scheduling apparatus.

In still another possible implementation of the first aspect, after execution of the migration task for the first file is triggered, the method further includes:
obtaining metadata that is of the first file and that is obtained through the second change, where the second change is performed by the first computing device or the second computing device, and the second change indicates a change of the storage layout information of the first file; and
determining migration progress of the first file based on the metadata that is of the first file and that is obtained through the second change.

Whether the data of the first file already exists in the home device may be determined by monitoring the storage layout information, to know the migration progress of the file, so as to improve user experience. In another aspect, task execution progress is tracked to handle a task that is slow in progress or fails to be executed and the like as quickly as possible, to improve system stability.

In addition, progress monitoring is implemented by monitoring a change of the metadata of the file, and data exchange with a device that performs migration is not required. Progress tracking and migration performing are decoupled.

In still another possible implementation of the first aspect, the metadata of the target file system is locally stored in the plurality of devices. When a device performs a change on the target file system, the device notifies the change to another device storing the metadata of the target file system. The another device correspondingly changes the locally stored metadata of the target file system based on the notification. This implements synchronization of the metadata of the target file system in the plurality of devices.

For example, the migration scheduling apparatus, the first computing device, and the second computing device all locally store metadata of the first file. When the migration scheduling apparatus performs the first change on the metadata of the first file in the metadata of the target file system, the migration scheduling apparatus may send the first notification. The first notification indicates that the first change occurs in the metadata of the first file. The first computing device and the second computing device correspondingly change the locally stored metadata of the target file system based on the first notification. This implements synchronization of the metadata of the target file system in the plurality of devices.

In still another possible implementation of the first aspect, the metadata of the target file system is stored in a global metadata service. The global metadata service can store the metadata of the target file system.

Further, the global metadata service can support access to and update of the metadata of the target file system. Specifically, when a device performs a change on the metadata of the target file system, the change is provided for the global metadata service. The plurality of devices may access changed metadata of the target file system from the global metadata service. This implements synchronization of the metadata of the target file system in the plurality of devices.

The global metadata service is used to manage and provide access and update for the metadata of the file system. The plurality of devices read or write the metadata in a format of the metadata in the global metadata service. This unifies a manner of representing the metadata of the file, and shields differences in metadata management and access control between heterogeneous storage devices, thereby not only improving convenience in data use and management for the user but also improving system scalability and flexibility.

For example, when needing to share the metadata of the file system, a new storage device can join in sharing by using the global metadata service. Similarly, when exiting sharing, the new storage device may exit sharing by disabling function interaction with the global metadata service. In conclusion, in the foregoing implementations, service expansion and reduction are more flexible and is likely to implement.

In still another possible implementation of the first aspect, before the obtaining metadata that is of the first file and that is obtained through the second change, the method further includes:
receiving a second notification, where the second notification indicates that the metadata of the first file is changed.

In still another possible implementation of the first aspect, the migration scheduling apparatus, the first computing device, and the second computing device all maintain the metadata of the target file system. The obtaining metadata that is of the first file and that is obtained through the second change includes:
obtaining, based on the second notification, the metadata that is of the first file and that is obtained through the second change.

Optionally, the second notification includes content of the second change, or the second notification includes the metadata that is of the first file and that is obtained through the second change.

In a possible solution, the second notification includes the content of the second change. For example, the content of the second change may include the identifier of the first file and an attribute (or a value of an attribute) that is of the file and that is changed through the second change. In this case, the migration scheduling apparatus may obtain, based on the metadata that is of the first file and that exists before the second change and the content of the second change, the metadata that is of the first file and that is obtained through the second change.

In still another possible solution, the second notification includes the metadata that is of the first file and that is obtained through the second change. In this case, the migration scheduling apparatus may obtain, based on the second notification, the metadata that is of the first file and that is obtained through the second change.

In still another possible implementation of the first aspect, a notification (for example, the first notification or the second notification) may be sent in a form of a message queue. A sender writes the notification into the message queue, and a receiver reads the message queue to receive the notification. This further reduces a coupling degree between different functional modules.

In still another possible implementation of the first aspect, the migration scheduling apparatus, the first computing device, and the second computing device all maintain the metadata of the target file system.

The obtaining metadata that is of the first file and that is obtained through the second change includes:
sending, to the first computing device or the second computing device, a request used to obtain changed metadata of the first file; and
obtaining, based on a response of the first computing device or the second computing device to the request, the metadata that is of the first file and that is obtained through the second change.

In still another possible implementation of the first aspect, the metadata of the target file system is stored in the global metadata service and is synchronized between the plurality of devices by using the global metadata service.

The obtaining metadata that is of the first file and that is obtained through the second change includes:
obtaining, from the global metadata service, the metadata that is of the first file and that is obtained through the second change.

In still another possible implementation of the first aspect, the global metadata service provides a service interface. The device may invoke the service interface to access and update the metadata.

The service interface is a communication interface, for example, an application programming interface (application programming interface, API), and can be configured to exchange data between different functional modules and provide a service. The abstract service interface can be configured to decouple an invoker from an implementer. For example, a device that invokes the service interface can provide related data based on a requirement of the service interface, and the global metadata service can obtain the related data and implement a corresponding function through the service interface. This not only improves metadata access and update efficiency, but also improves system scalability and flexibility.

In still another possible implementation of the first aspect, the metadata of the target file system is stored in the global metadata service and is synchronized between the plurality of devices by using the global metadata service.

The performing a first change on metadata of the first file includes:
implementing the first change through the service interface provided by the global metadata service.

In still another possible implementation of the first aspect, the global metadata service is located in any one of the plurality of devices, or is located in any device other than the plurality of devices.

For example, the global metadata service is located in a third computing device. The third computing device may be a computing device that is the same as the first computing device or the second computing device, or may be another computing device other than the first computing device and the second computing device.

Optionally, the service interface of the global metadata service may be provided by the third computing device for the migration scheduling apparatus. Alternatively, the third computing device may provide another interface (referred to as a first interface for ease of differentiation) for the migration scheduling apparatus. A function of invoking the service interface of the global metadata service may be implemented by invoking the first interface.

In still another possible implementation of the first aspect, the metadata of the target file system is a tabular structure, and the metadata may be modified. The tabular structure is a data structure including a row and a column. Each row (or each column) includes a plurality of values, and each value corresponds to one attribute.

A row (or a column) of metadata may be added to or deleted from the metadata of the tabular structure, or an existing attribute value in the metadata may also be modified. In other words, the first change may be implemented by modifying the metadata of the target file system.

In still another possible implementation of the first aspect, the metadata of the target file system is a streaming structure and includes a plurality of metadata records. Each metadata record includes an identifier of one node and an attribute of the node. The node is a file or a directory. The attribute of the node includes ownership information of the node and storage layout information of the node.

The streaming structure is a data structure including a plurality of pieces of information, and each piece of information is one metadata record. The streaming structure has the following features: read-only, append-only, and orderliness. "Read-only" means that a value of the record in the streaming structure can only be read but cannot be modified. "Append-only" indicates that only a new record can be appended to the streaming structure but an existing record cannot be deleted (or modified), but a plurality of records belonging to a same node may be merged into one record. "Orderliness" means that the records in the streaming structure have a logical sequence, and a to-be-appended record is added at an end of the streaming structure.

In still another possible implementation of the first aspect, the performing a first change on metadata of the first file includes:
appending a first metadata record to the end of the metadata of the target file system, where the first metadata record includes the identifier of the first file and changed ownership information of the first file, and the changed ownership information of the first file indicates that the storage device to which the first file belongs is the second storage device.

In the foregoing implementation, the first change can be performed. In addition, the first change is implemented by adding a metadata record to a metadata stream. In this case, another device may learn a change of the metadata in the first file system by obtaining a change (the appended record) of the metadata stream, and correspondingly, may update a local file hierarchy or a node attribute of the first file system. This facilitates synchronization of a file view on the plurality of devices.

In still another possible implementation of the first aspect, before the determining a migration task for a first file, the method further includes:
determining the migration task for the first file based on external event information, where
the external event information includes one or more of the following information: a network connection status, a device health status, and a person transfer status related to the first file.

In the foregoing implementation, triggering of data migration is related to the external event information. When the external event information meets a migration triggering condition, a corresponding migration task is determined, to migrate data. This implements intelligent migration integrating a plurality of information streams, and improves user experience.

The network connection status is used as an example. When communication of a line is interrupted, and it is predicted that communication on a site A is affected, data on the site A may be migrated to a site B.

The device health status is used as an example. When a storage and access capability of a storage device reaches a preset lower limit, data in the storage device is migrated to another storage device.

The person transfer status related to the first file is used as an example. When a person in a research and development group for a service is on a business trip in a different place, migration may be actively triggered, to migrate data of the service to a storage device that is closer to a business trip destination.

In still another possible implementation of the first aspect, the determining a migration task for a first file includes:
determining the migration task for the first file based on an analysis result of the metadata of the first file, where the analysis result includes one or more of the following information: a cold or hot state of the first file, security of the first file, and a service related to the first file.

In an example, a cold or hot state of the metadata may be indicated by using an access frequency of the file. For example, the metadata of the first file includes an attribute indicating a quantity of access times of the file within specific duration. If the quantity of access times is greater than or is greater than or equal to a first threshold, the data of the first file is migrated to a device (for example, the second storage device) with a high storage speed. This improves efficiency of accessing the data of the first file, and improves system quality of service. Similarly, if the quantity of access times of the first file is less than or is less than or equal to a second threshold, the data of the file is migrated to a device with a large storage capacity. This reduces storage costs. Optionally, the first threshold and the second threshold may be input by an administrator (for example, a developer or a management department), a vendor, or the like, or may be preset.

In an example, the metadata of the first file may include an attribute indicating a security level of the file. For example, if a security level of the first file is high, but a security level of the first storage device does not meet a security level requirement of the first file, the data of the first file is migrated to a device that can meet the security level requirement of the first file. This effectively ensures a security requirement of the user for the file, and improves system quality of service.

In an example, the metadata of the first file includes an attribute indicating the service related to the first file. For example, the service related to the first file is an in-vehicle service, a video service, or a file download service. For example, if the first file is used to store data of the in-vehicle service, the data of the first file is also correspondingly migrated when the data of the in-vehicle service needs to be migrated to the second storage device. In this way, the user can migrate the file based on different services. This improves convenience of managing service data by the user, and improves system quality of service.

It can be learned that the analysis result of the metadata can indicate a migration requirement (for example, an access requirement, a security requirement, or a service requirement) on the file. The migration task is determined based on the migration requirement, to implement overall storage optimization. In addition, the user can express the migration requirement on the file by updating the metadata of the file, to implement intelligent data management, and improve convenience in data use and management for the user.

In still another possible implementation of the first aspect, the determining a migration task for a first file includes:
determining the migration task for the first file according to a migration indication that is input by the user and that is for the first file.

In this implementation, the user can implement migration of a file by inputting a migration instruction. This can meet a personalized requirement of the user, and improve user experience.

In still another possible implementation of the first aspect, the method further includes:
determining a migration task for a second file; and
orchestrating an execution sequence of the migration task for the first file and the migration task for the second file.

In a possible design, orchestrating the tasks may include determining an execution sequence, execution priorities, and the like of the tasks, for example, determining which file is to be migrated first. In this way, it can be determined, based on priorities of requirements, that migration tasks of some files are to be preferably performed. This improves user experience. For example, a file whose access frequency increases sharply in a short period of time may be preferably migrated, to improve an access rate of the file as quickly as possible, so as to improve user experience.

In still another possible design, a plurality of tasks may be merged in a task orchestration process. For example, a task A indicates to migrate the first file from the first storage device to the second storage device, and a task B indicates to migrate the first file from the first storage device to a third storage device. In this case, the task A and the task B may be merged to obtain a new task. The new task indicates to migrate the first file from the first storage device to the third storage device. In this way, in one aspect, a probability of a task execution error can be reduced. In another aspect, computing power consumption of task execution can be reduced. This effectively improves task execution efficiency, and improves user experience.

In conclusion, in the foregoing implementation, orchestration is performed before the task is executed. In this way, the migration tasks are executed in an appropriate execution sequence and execution manner. This improves user experience.

According to a second aspect, an embodiment of this application provides a data migration method, applied to a first computing device. The first computing device is located in a first storage device or is connected to a first storage device. The first storage device stores data of a first file. The method further includes:
obtaining metadata of the first file, where the metadata of the first file includes ownership information of the first file and storage layout information of the first file; and
migrating the data of the first file from the first storage device to a second storage device when determining that a storage device indicated by the ownership information of the first file is the second storage device and the storage layout information of the first file indicates that a storage device storing the first file does not include the second storage device but includes the first storage device.

In embodiments of this application, a migration operation for the file is triggered by changing the ownership information of the file. When the ownership information of the file indicates the second storage device, and the storage layout information of the file includes an indication that the storage device storing the first file does not include the second storage device but includes the first storage device, the first storage device migrates the first file from the first storage device to the second storage device. In embodiments of this application, data migration is triggered based on a file status (an attribute status like a file ownership or a file storage layout). In this way, the first computing device can migrate the file after obtaining that the ownership information of the file is changed. This improves data migration efficiency, and improves convenience in data use and management. Especially for a service that includes a plurality of storage devices or a plurality of data centers, functions of the devices can be further decoupled in a process of status-based data migration, to greatly improve flexibility and scalability of a service system.

In addition, when the method is used for migration, a storage location of the file is still indicated by the storage layout information. Therefore, the foregoing data migration method may not affect normal use of the data of the file by a user, to improve stability of the service system.

In a possible implementation of the second aspect, the first file belongs to a target file system. The metadata of the first file is included in metadata of the target file system. The metadata of the target file system is synchronized between a plurality of devices. The plurality of devices include the first computing device.

In another possible implementation of the second aspect, the metadata of the target file system is stored in a global metadata service and is synchronized between the plurality of devices by using the global metadata service.

The obtaining metadata of the first file includes:
obtaining current metadata of the first file from the global metadata service.

In still another possible implementation of the second aspect, the migrating the data of the first file from the first storage device to a second storage device includes:
pushing the data of the first file to a shared storage area, where the shared storage area is connected to the first computing device and a second computing device, and the second computing device is located in the second storage device or is connected to the second storage device; and
performing a first change on the metadata of the first file, to trigger the second computing device to obtain the data of the first file from the shared storage area and store the data into the second storage device, where the first change indicates to add the shared storage area to the storage device indicated by the storage layout information of the first file; and after the first change, the storage layout information of the first file indicates that the storage device storing the first file includes the first storage device and the shared storage area and does not include the second storage device.

In this implementation, in a migration process, the data of the first file is temporarily stored by using an intermediate shared storage area. A source device does not need to establish a secure access control mechanism for the data with a destination device. This further decouples the source device from the destination device, and improve flexibility and scalability of the service system.

In addition, the storage layout information indicates that the data is already pushed to the shared storage area. In this manner, a storage location of the data can be indicated to the second storage device without sensing the second storage device. This further decouples the first storage device and the second storage device, thereby improving flexibility and scalability of the service system.

In still another possible implementation of the second aspect, the ownership information of the first file is an identifier of the second storage device. Before the first change, the storage layout information of the first file includes an identifier of the first storage device and does not include the identifier of the second storage device.

The performing a first change on the metadata of the first file includes:
adding an identifier of the shared storage area to the storage layout information of the first file.

In still another possible implementation of the second aspect, before the obtaining metadata of the first file, the method further includes:
receiving a first notification, where the first notification indicates that the metadata of the first file is changed.

After the performing a first change on the metadata of the first file, the method further includes:
sending a second notification, where the first notification indicates that the metadata of the first file is changed.

In still another possible implementation of the second aspect, the obtaining metadata of the first file includes:
synchronizing the metadata of the target file system, where the metadata of the target file system includes the metadata of the first file.

In a possible implementation, the metadata of the target file system is locally stored in the plurality of devices. When a device performs a change on the target file system, the device notifies the change to another device storing the metadata of the target file system. The another device correspondingly changes the locally stored metadata of the target file system based on the notification. This implements synchronization of the metadata of the target file system in the plurality of devices.

In a possible implementation, the metadata of the target file system is stored in a global metadata service. The global metadata service can store the metadata of the target file system.

Further, the global metadata service can support access to and update of the metadata of the target file system.

In still another possible implementation of the second aspect, the metadata of the target file system is a streaming structure and includes a plurality of metadata records. Each metadata record includes an identifier of one node and an attribute of the node. The node is a file or a directory. The attribute of the node includes ownership information of the node and storage layout information of the node.

The performing a first change on the metadata of the first file includes:
appending a first metadata record to an end of the metadata of the target file system, where the first metadata record includes an identifier of the first file and the storage layout information of the first file, and the storage layout information of the first file indicates that the storage device storing the first file includes the first storage device and the shared storage area.

In still another possible implementation of the second aspect, the method further includes:
deleting the data of the first file from the first storage device when obtaining metadata that is of the first file and that is obtained through a second change, where the second change indicates a change of the storage layout information of the first file, and after the second change, the storage layout information of the first file indicates that the storage device storing the first file includes the first storage device and includes the second storage device; and
performing a third change on the metadata of the first file, where the third change indicates to delete the first storage device from the storage device indicated by the storage layout information of the first file; and after the third change, the storage layout information of the first file indicates that the storage device storing the first file does not include the first storage device.

In the foregoing implementation, when the data of the first file is already stored in the second storage device, the data in the source device (the first storage device) can be deleted. This prevents the plurality of storage devices from repeatedly storing data of a file, thereby reducing storage space and optimizing overall storage costs.

In still another possible implementation of the second aspect, before the deleting the first file from the first storage device, the method further includes:
marking the data of the first file as deletable, so that when the data of the first file is in a deletable state, an operation of deleting the first file is performed.

For example, when the data of the first file is being used, it is inconvenient to immediately perform the deletion operation. In this case, the data of the first file may be marked first, and is deleted after the file is used.

For another example, before the file is deleted, the file is first marked as deletable. The deletable file cannot be accessed in a normal manner. The file is uniformly deleted when a preset condition is met. The preset condition herein may be that the data marked as deletable reaches preset duration, the data marked as deletable reaches a preset size, or the like. In this way, the user can conveniently retrieve the data of the first file from the first storage device, to reduce a data loss caused by a misoperation, and improve user experience.

In still another possible implementation of the second aspect, the migrating the data of the first file from the first storage device to a second storage device includes:
pushing the data of the first file to a second computing device.

For example, if the first computing device and the second computing device already establish a connection or determine that the peer devices are trusted devices, the first computing device may directly push the data of the first file to the second computing device without using an intermediate device. This improves data migration efficiency.

For another example, the first computing device may push the data of the first file to the second computing device if the first storage device (or the first computing device) and the second storage device (or the second computing device) are devices located in a same data center.

In still another possible implementation of the second aspect, the method further includes:
receiving a pull request for the first file from the second computing device.

In the foregoing implementation, the second computing device sends the pull request. It indicates that the second computing device and/or the second storage device should be in an available state. This can prevent the data of the first file from being migrated to an unavailable device, thereby improving data security and availability.

In still another possible implementation of the second aspect, the method further includes:
providing a local file view of the first storage device, where the local file view indicates a hierarchy of a plurality of files stored in the first storage device, and storage layout information of the plurality of files indicates the first storage device.

In the foregoing implementation, the first computing device can provide a local view externally based on the storage layout information of the file. In this way, the user or an application can conveniently obtain the data of the file stored in the first storage device, thereby meeting a visualization requirement for the file and improving user experience.

In still another possible implementation of the second aspect, the method further includes:
providing an ownership file view of the first storage device, where the ownership local file view includes information about a plurality of files, and ownership information of the plurality of files indicates the first storage device.

In the foregoing implementation, the first computing device can provide the owned file view, to present information about a file belonging to the first storage device. This meets a visualization requirement for the file belonging to the first storage device, thereby improving user experience.

In still another possible implementation of the second aspect, the file belonging to the first storage device and a file belonging to the second storage device belong to a global file system. The method further includes:
providing a global file view, where the global file view includes information about the file belonging to the first storage device and information about the file belonging to the second storage device.

In this implementation, the global file view can integrate information about files across devices into one file view. In this way, data in different devices is no longer isolated data. Lower-layer union of the global file system is not sensed by an upper-layer application. A manner in which the upper-layer application uses the global file system is as easy as using a conventional file system. This greatly improves convenience in data use and management for the user.

According to a third aspect, an embodiment of this application provides a data migration method, applied to a second computing device. The second computing device is located in a second storage device, or the second computing device is connected to a second storage device. The method includes:
obtaining metadata of a first file, where the metadata of the first file includes ownership information of the first file and storage layout information of the first file; and
pulling data of the first file from a device storing the data of the first file to the second storage device when the ownership information of the first file indicates that a storage device to which the first file belongs is the second storage device and the storage layout information of the first file indicates that a storage device storing the first file does not include the second storage device.

In embodiments of this application, a migration operation for the file is triggered by changing the ownership information of the file. When the ownership information of the file indicates the second storage device, and the storage layout information of the file includes an indication that the storage device storing the first file does not include the second storage device but includes a first storage device, the second computing device pulls the first file from the first storage device to the second storage device. In embodiments of this application, data migration is triggered based on a file status (an attribute status like a file ownership or a file storage layout). In this way, the second computing device can pull, after obtaining that the ownership information of the file is changed, data of a file belonging to the second storage device. This improves data migration efficiency, and improves convenience in data use and management. Especially for a service that includes a plurality of storage devices or a plurality of data centers, functions of the devices can be further decoupled in a process of status-based data migration, to greatly improve flexibility and scalability of a service system.

In addition, when the method is used for migration, a storage location of the file is still indicated by the storage layout information. Therefore, the foregoing data migration method may not affect normal use of the data of the file by a user, to improve stability of the service system.

In a possible implementation of the third aspect, the method further includes:
performing a first change on the metadata of the first file, where the first change indicates to add the second storage device to the storage device indicated by the storage layout information of the first file.

In another possible implementation of the third aspect, the ownership information of the first file is an identifier of the second storage device. Before the first change, the storage layout information of the first file does not include the identifier of the second storage device.

The performing a first change on the metadata of the first file includes:
adding the identifier of the second storage device to the storage layout information of the first file.

In still another possible implementation of the third aspect, the storage layout information of the first file indicates that the storage device storing the first file includes the first storage device. Before the pulling data of the first file from a device storing the data of the first file to the second storage device, the method further includes:
sending a pull request for the first file, where the pull request indicates a first computing device to push the first file, and the first computing device is located in the first storage device or is connected to the first storage device.

In still another possible implementation of the third aspect, the storage layout information of the first file indicates that the storage device storing the first file includes a shared storage area. The pulling data of the first file from a device storing the data of the first file to the second storage device includes:
pulling the data of the first file from the shared storage area to the second storage device.

In still another possible implementation of the third aspect, the storage layout information of the first file indicates that the storage device storing the first file includes the first storage device. The pulling data of the first file from a device storing the data of the first file to the second storage device includes:
pulling the data of the first file from the first storage device to the second storage device.

In still another possible implementation of the third aspect, the pulling data of the first file from a device storing the data of the first file to the second storage device includes:
receiving the data that is pushed by the first computing device and that is of the first file.

In still another possible implementation of the third aspect, the first file belongs to a target file system. The metadata of the first file is included in metadata of the target file system. The metadata of the target file system is stored in a global data service.

The obtaining metadata of a first file includes:
obtaining current metadata of the first file from the global metadata service.

In still another possible implementation of the third aspect, the metadata of the target file system is a streaming structure and includes a plurality of metadata records. Each metadata record includes an identifier of one node and an attribute of the node. The node is a file or a directory. The attribute of the node includes ownership information of the node and storage layout information of the node. The performing a first change on the metadata of the first file includes:
appending a first metadata record to an end of the metadata of the target file system, where the first metadata record includes an identifier of the first file and the storage layout information of the first file, and the storage layout information of the first file includes the identifier of the second storage device.

In still another possible implementation of the third aspect, the method further includes:
providing a local file view of the second storage device, where the local file view indicates a hierarchy of a plurality of files stored in the first storage device, and storage layout information of the plurality of files indicates the first storage device.

In still another possible implementation of the third aspect, the method further includes:
providing an ownership file view of the second storage device, where the ownership local file view includes information about a plurality of files, and ownership information of the plurality of files indicates the second storage device.

In still another possible implementation of the third aspect, a file belonging to the first storage device and the file belonging to the second storage device belong to a global file system. The method further includes:
providing a global file view, where the global file view includes information about the file belonging to the first storage device and information about the file belonging to the second storage device.

According to a fourth aspect, an embodiment of this application provides a data migration method, applied to a first computing device. The first computing device is located in a first storage device or is connected to a first storage device. The first storage device stores data of a first file. The method further includes:
receiving a pull request for the first file from a second computing device, where the second computing device is connected to a second storage device;
pushing the data of the first file to a shared storage area; and
performing a first change on metadata of the first file, to trigger the second computing device to obtain the data of the first file from the shared storage area and store the data into the second storage device, where the first change indicates to add the shared storage area to a storage device indicated by storage layout information of the first file; and after the first change, the storage layout information of the first file indicates that the storage device storing the first file includes the first storage device and the shared storage area, and does not include the second storage device.

In a possible implementation of the fourth aspect, ownership information of the first file is an identifier of the second storage device. Before the first change, the storage layout information of the first file includes an identifier of the first storage device and does not include the identifier of the second storage device.

The performing a first change on the metadata of the first file includes:
adding an identifier of the shared storage area to the storage layout information of the first file.

In another possible implementation of the fourth aspect, the first file belongs to a target file system. The metadata of the first file is included in metadata of the target file system. The metadata of the target file system is synchronized between a plurality of devices. The plurality of devices include the first computing device.

In still another possible implementation of the fourth aspect, after the performing a first change on metadata of the first file, the method further includes:
sending a first notification, where the first notification indicates that the metadata of the first file is changed.

In still another possible implementation of the fourth aspect, the metadata of the target file system is a streaming structure and includes a plurality of metadata records. Each metadata record includes an identifier of one node and an attribute of the node. The node is a file or a directory. The attribute of the node includes ownership information of the node and storage layout information of the node.

The performing a first change on metadata of the first file includes:
appending a first metadata record to an end of the metadata of the target file system, where the first metadata record includes an identifier of the first file and the storage layout information of the first file, and the storage layout information of the first file indicates that the storage device storing the first file includes the first storage device and the shared storage area.

In still another possible implementation of the fourth aspect, the method further includes:
deleting the data of the first file from the first storage device when obtaining metadata that is of the first file and that is obtained through a second change, where the second change indicates a change of the storage layout information of the first file, and after the second change, the storage layout information of the first file indicates that the storage device storing the first file includes the first storage device and includes the second storage device; and
performing a third change on the metadata of the first file, where the third change indicates to delete the first storage device from the storage device indicated by the storage layout information of the first file; and after the third change, the storage layout information of the first file indicates that the storage device storing the first file does not include the first storage device.

In still another possible implementation of the fourth aspect, before the deleting the first file from the first storage device, the method further includes:
marking the data of the first file as deletable, so that when the data of the first file is in a deletable state, an operation of deleting the first file is performed.

In still another possible implementation of the fourth aspect, the method further includes:
providing a local file view of the first storage device, where the local file view indicates a hierarchy of a plurality of files stored in the first storage device, and storage layout information of the plurality of files indicates the first storage device.

In still another possible implementation of the fourth aspect, the method further includes:
providing an ownership file view of the first storage device, where the ownership local file view includes information about a plurality of files, and ownership information of the plurality of files indicates the first storage device.

In still another possible implementation of the fourth aspect, a file belonging to the first storage device and a file belonging to the second storage device belong to a global file system. The method further includes:
providing a global file view, where the global file view includes information about the file belonging to the first storage device and information about the file belonging to the second storage device.

According to a fifth aspect, an embodiment of this application provides a migration scheduling apparatus. The migration scheduling apparatus includes a task determining module and a metadata update module. The migration scheduling apparatus is used in the method according to any one in the first aspect.

In a possible implementation of the fifth aspect, the task determining module is configured to determine a migration task for a first file. Data of the first file is stored in a first storage device. The migration task for the first file indicates to migrate the data of the first file from the first storage device to a second storage device.

The metadata update module is configured to perform a first change on metadata of the first file, to trigger execution of the migration task for the first file. The first change indicates to change, from the first storage device to the second storage device, a storage device to which the first file belongs.

In another possible implementation of the fifth aspect, the metadata of the first file includes ownership information of the first file and storage layout information of the first file. Before the first change is performed, a storage device indicated by the ownership information of the first file is the first storage device, and the storage layout information of the first file indicates that a storage device storing the first file includes the first storage device and does not include the second storage device. Optionally, the ownership information of the first file is an identifier of the first storage device. The storage layout information of the first file includes the identifier of the first storage device and does not include an identifier of the second storage device.

In still another possible implementation of the fifth aspect, the metadata update module is configured to change the ownership information of the first file from the identifier of the first storage device to the identifier of the second storage device.

In still another possible implementation of the fifth aspect, the migration task for the first file includes an identifier of the first file, the identifier of the first storage device, and the identifier of the second storage device.

In still another possible implementation of the fifth aspect, the first file belongs to a target file system. The metadata of the first file is included in metadata of the target file system. The metadata of the target file system is synchronized between a plurality of devices. The plurality of devices includes a first computing device and a second computing device. The first computing device is located in the first storage device or is connected to the first storage device. The second computing device is located in the second storage device or is connected to the second storage device. Further, the plurality of devices may further include the migration scheduling apparatus.

In still another possible implementation of the fifth aspect, the migration scheduling apparatus further includes a communication module. The communication module is configured to send a first notification. The first notification indicates that the metadata of the first file is changed, so that the first computing device or the second computing device obtains, based on the first notification, metadata that is of the first file and that is obtained through the first change, and executes the migration task for the first file based on the metadata that is of the first file and that is obtained through the first change.

Optionally, the first notification indicates which changes occur in the metadata of the first file. For example, the first notification may include content of the first change, and/or the first notification may include the metadata that is of the first file and that is obtained through the first change. Alternatively, optionally, the first notification indicates that the first change occurs, but does not include specific content of the change and the metadata that is of the first file and that is obtained through the first change.

In still another possible implementation of the fifth aspect, the migration scheduling apparatus further includes a task monitoring module. The task monitoring module is configured to:
obtain metadata that is of the first file and that is obtained through a second change, where the second change is performed by the first computing device or the second computing device, and the second change indicates a change of the storage layout information of the first file; and
determine migration progress of the first file based on the metadata that is of the first file and that is obtained through the second change.

In still another possible implementation of the fifth aspect, the metadata of the target file system is locally stored in the plurality of devices.

In still another possible implementation of the fifth aspect, the metadata of the target file system is stored in a global metadata service. The global metadata service can store the metadata of the target file system. Further, the global metadata service can support access to and update of the metadata of the target file system.

In still another possible implementation of the fifth aspect, the migration scheduling apparatus further includes a communication module. The communication module is configured to:
receive a second notification, where the second notification indicates that the metadata of the first file is changed.

In still another possible implementation of the fifth aspect, the task monitoring module is further configured to:
obtain, based on the second notification, the metadata that is of the first file and that is obtained through the second change, where optionally, the second notification includes content of the second change, or the second notification includes the metadata that is of the first file and that is obtained through the second change.

In still another possible implementation of the fifth aspect, a notification (for example, the first notification or the second notification) may be sent in a form of a message queue. A sender writes a message into the message queue, and a receiver reads the message queue to receive the notification. This further reduces a coupling degree between different functional modules.

In still another possible implementation of the fifth aspect, the communication module is further configured to send, to the first computing device or the second computing device, a request used to obtain changed metadata of the first file.

The task monitoring module is further configured to obtain, based on a response of the first computing device or the second computing device to the request, the metadata that is of the first file and that is obtained through the second change.

In still another possible implementation of the fifth aspect, the task monitoring module is further configured to obtain, from the global metadata service, the metadata that is of the first file and that is obtained through the second change.

In still another possible implementation of the fifth aspect, the global metadata service provides a service interface. The migration scheduling apparatus may invoke the service interface to access and update the metadata.

The service interface is a communication interface, for example, an application programming interface (application programming interface, API), and can be configured to exchange data between different functional modules and provide a service.

In still another possible implementation of the fifth aspect, the metadata update module is further configured to:
implement the first change through the service interface provided by the global metadata service.

In still another possible implementation of the fifth aspect, the global metadata service is located in any one of the plurality of devices, or is located in any device other than the plurality of devices.

For example, the global metadata service is located in a third computing device. The service interface of the global metadata service may be provided by the third computing device for the migration scheduling apparatus. Alternatively, the third computing device may provide another interface (referred to as a first interface for ease of differentiation) for the migration scheduling apparatus. A function of invoking the service interface of the global metadata service may be implemented by invoking the first interface.

In still another possible implementation of the fifth aspect, the metadata of the target file system is a tabular structure, and the metadata may be modified. The tabular structure is a data structureincluding a row and a column. Each row (or each column) includes a plurality of values, and each value corresponds to one field.

Metadata may be added to or deleted from the metadata of the tabular structure, or existing metadata may also be modified. In other words, the first change may alternatively be implemented by modifying the metadata of the target file system.

In still another possible implementation of the fifth aspect, the metadata of the target file system is a streaming structure and includes a plurality of metadata records. Each metadata record includes an identifier of one node and an attribute of the node. The node is a file or a directory. The attribute of the node includes ownership information of the node and storage layout information of the node.

In still another possible implementation of the fifth aspect, the metadata update module is further configured to:
append a first metadata record to the end of the metadata of the target file system, where the first metadata record includes the identifier of the first file and changed ownership information of the first file, and the changed ownership information of the first file indicates that the storage device to which the first file belongs is the second storage device.

In still another possible implementation of the fifth aspect, the task determining module is further configured to:
determine the migration task for the first file based on external event information, where
the external event information includes one or more of the following information: a network connection status, a device health status, and a person transfer status related to the first file.

In still another possible implementation of the fifth aspect, the task determining module is further configured to:
determine the migration task for the first file based on an analysis result of the metadata of the first file, where the analysis result includes one or more of the following information: a cold or hot state of the first file, security of the first file, and a service related to the first file.

In still another possible implementation of the fifth aspect, the task determining module is further configured to:
determine the migration task for the first file according to a migration indication that is input by the user and that is for the first file.

In still another possible implementation of the fifth aspect, the task determining module is further configured to determine a migration task for a second file.

The migration scheduling apparatus further includes a task orchestration module. The task orchestration module is configured to orchestrate an execution sequence of the migration task for the first file and the migration task for the second file.

In a possible design, orchestrating the tasks may include determining an execution sequence, execution priorities, and the like of the tasks.

In still another possible design, a plurality of tasks may be merged in a task orchestration process.

According to a sixth aspect, an embodiment of this application provides a computing apparatus. The computing apparatus includes a metadata obtaining module and a migration module. The computing apparatus is configured to implement the method according to any one in the second aspect.

Optionally, the computing apparatus is located in a first storage device or is connected to a first storage device.

In a possible implementation of the sixth aspect, the metadata obtaining module is configured to obtain metadata of a first file. The metadata of the first file includes ownership information of the first file and storage layout information of the first file.

The migration module is configured to migrate data of the first file from the first storage device to a second storage device when it is determined that a storage device indicated by the ownership information of the first file is the second storage device and the storage layout information of the first file indicates that a storage device storing the first file does not include the second storage device but includes the first storage device.

In another possible implementation of the sixth aspect, the first file belongs to a target file system. The metadata of the first file is included in metadata of the target file system. The metadata of the target file system is synchronized between a plurality of devices. The plurality of devices include the computing apparatus or a first computing device in which the computing apparatus is located.

In still another possible implementation of the sixth aspect, the metadata of the target file system is stored in the global metadata service and is synchronized between the plurality of devices by using the global metadata service.

The metadata obtaining module is further configured to:
obtain current metadata of the first file from the global metadata service.

In still another possible implementation of the sixth aspect, the migration module is further configured to:
push the data of the first file to a shared storage area, where the shared storage area is connected to the first computing device and a second computing device, and the second computing device is located in the second storage device or is connected to the second storage device.

The computing apparatus further includes a metadata update module. The metadata update module is configured to perform a first change on the metadata of the first file, to trigger the second computing device to obtain the data of the first file from the shared storage area and store the data into the second storage device. The first change indicates to add the shared storage area to a storage device indicated by storage layout information of the first file. After the first change, the storage layout information of the first file indicates that the storage device storing the first file includes the first storage device and the shared storage area and does not include the second storage device.

In still another possible implementation of the sixth aspect, the ownership information of the first file is an identifier of the second storage device. Before the first change, the storage layout information of the first file includes an identifier of the first storage device and does not include the identifier of the second storage device.

The metadata update module is further configured to:
add an identifier of the shared storage area to the storage layout information of the first file.

In still another possible implementation of the sixth aspect, the computing apparatus further includes a communication module. The communication module is configured to:
receive a first notification, where the first notification indicates that the metadata of the first file is changed.

In still another possible implementation of the sixth aspect, the computing apparatus further includes the communication module. The communication module is configured to:
send a second notification, where the first notification indicates that the metadata of the first file is changed.

In still another possible implementation of the sixth aspect, the metadata obtaining module is further configured to:
synchronize the metadata of the target file system, where the metadata of the target file system includes the metadata of the first file.

In still another possible implementation of the sixth aspect, the metadata of the target file system is a streaming structure and includes a plurality of metadata records. Each metadata record includes an identifier of one node and an attribute of the node. The node is a file or a directory. The attribute of the node includes ownership information of the node and storage layout information of the node.

The metadata update module is further configured to append a first metadata record to an end of the metadata of the target file system. The first metadata record includes an identifier of the first file and the storage layout information of the first file. The storage layout information of the first file indicates that the storage device storing the first file includes the first storage device and the shared storage area.

In still another possible implementation of the sixth aspect, the computing apparatus further includes a deletion control module. The deletion control module is configured to:
delete the data of the first file from the first storage device when metadata that is of the first file and that is obtained through a second change is obtained, where the second change indicates a change of the storage layout information of the first file. After the second change, the storage layout information of the first file indicates that the storage device storing the first file includes the first storage device and includes the second storage device.

The metadata update module is further configured to perform a third change on the metadata of the first file. The third change indicates to delete the first storage device from the storage device indicated by the storage layout information of the first file. After the third change, the storage layout information of the first file indicates that the storage device storing the first file does not include the first storage device.

In a possible implementation of the sixth aspect, the deletion control module is further configured to:
mark the data of the first file as deletable, so that when the data of the first file is in a deletable state, an operation of deleting the first file is performed.

In a possible implementation of the sixth aspect, the migration module is further configured to:
push the data of the first file to a second computing device.

In a possible implementation of the sixth aspect, the computing apparatus further includes the communication module. The communication module is configured to:
receive a pull request for the first file from the second computing device.

In still another possible implementation of the sixth aspect, the computing apparatus further includes a view providing module. The view providing module is configured to provide an ownership file view of the first storage device. The ownership local file view includes information about a plurality of files, and ownership information of the plurality of files indicates the first storage device.

In still another possible implementation of the sixth aspect, a file belonging to the first storage device and a file belonging to the second storage device belong to a global file system. The computing apparatus further includes a view providing module. The view providing module is configured to provide a global file view. The global file view includes information about a file belonging to the first storage device and information about a file belonging to the second storage device.

According to a seventh aspect, an embodiment of this application provides a computing apparatus. The computing apparatus includes a metadata obtaining module and a migration module. The computing apparatus is configured to implement the method according to any one in the third aspect.

Optionally, the computing apparatus is located in a second storage device or is connected to a second storage device.

In another possible implementation of the seventh aspect, the metadata obtaining module is configured to obtain metadata of a first file. The metadata of the first file includes ownership information of the first file and storage layout information of the first file.

The migration module is configured to pull data of the first file from a device storing the data of the first file to the second storage device when the ownership information of the first file indicates that a storage device to which the first file belongs is the second storage device and the storage layout information of the first file indicates that a storage device storing the first file does not include the second storage device.

In still another possible implementation of the seventh aspect, the computing apparatus further includes a metadata update module. The metadata update module is further configured to:
perform a first change on the metadata of the first file, where the first change indicates to add the second storage device to the storage device indicated by the storage layout information of the first file.

In still another possible implementation of the seventh aspect, the ownership information of the first file is an identifier of the second storage device. Before the first change, the storage layout information of the first file does not include the identifier of the second storage device.

The metadata update module is further configured to:
add the identifier of the second storage device to the storage layout information of the first file.

In still another possible implementation of the seventh aspect, the storage layout information of the first file indicates that the storage device storing the first file includes a first storage device. The computing apparatus further includes a communication module. The communication module is configured to:
send a pull request for the first file, where the pull request indicates a first computing device to push the first file, and the first computing device is located in the first storage device or is connected to the first storage device.

In still another possible implementation of the seventh aspect, the storage layout information of the first file indicates that the storage device storing the first file includes a shared storage area. The migration module is configured to:
pull the data of the first file from the shared storage area to the second storage device.

In still another possible implementation of the seventh aspect, the storage layout information of the first file indicates that the storage device storing the first file includes a first storage device. The migration module is further configured to:
pull the data of the first file from the first storage device to the second storage device.

In still another possible implementation of the seventh aspect, the first file belongs to a target file system. The metadata of the first file is included in metadata of the target file system. The metadata of the target file system is stored in a global data service.

The metadata obtaining module is further configured to:
obtain current metadata of the first file from the global metadata service.

In still another possible implementation of the seventh aspect, the metadata of the target file system is a streaming structure and includes a plurality of metadata records. Each metadata record includes an identifier of one node and an attribute of the node. The node is a file or a directory. The attribute of the node includes ownership information of the node and storage layout information of the node. The performing first change on the metadata of the first file includes:
appending a first metadata record to an end of the metadata of the target file system, where the first metadata record includes an identifier of the first file and the storage layout information of the first file, and the storage layout information of the first file includes the identifier of the second storage device.

In still another possible implementation of the seventh aspect, the computing apparatus further includes a view providing module. The view providing module is configured to provide a local file view of the first storage device. The local file view indicates a hierarchy of a plurality of files stored in the first storage device. Storage layout information of the plurality of files indicates the first storage device.

In still another possible implementation of the seventh aspect, the computing apparatus further includes a view providing module. The view providing module is configured to provide an ownership file view of the first storage device. The ownership local file view includes information about a plurality of files, and ownership information of the plurality of files indicates the first storage device.

In still another possible implementation of the seventh aspect, a file belonging to the first storage device and a file belonging to the second storage device constitute a global file system in a manner of federation. The computing apparatus further includes a view providing module. The view providing module is configured to provide a global file view. The global file view includes information about a file belonging to the first storage device and information about a file belonging to the second storage device.

According to an eighth aspect, an embodiment of this application provides a computing apparatus. The computing apparatus includes a communication module, a migration module, and a metadata update module. The computing apparatus is configured to implement the method according to any one in the fourth aspect.

Optionally, the computing apparatus is located in a first storage device or is connected to a first storage device.

In a possible implementation of the eighth aspect, the communication module is configured to receive a pull request for a first file from a second computing device. The second computing device is connected to a second storage device.

The migration module is configured to pushing data of the first file to a shared storage area.

The metadata update module is configured to perform a first change on metadata of the first file, to trigger the second computing device to obtain the data of the first file from the shared storage area and store the data into the second storage device. The first change indicates to add the shared storage area to a storage device indicated by storage layout information of the first file. After the first change, the storage layout information of the first file indicates that the storage device storing the first file includes the first storage device and the shared storage area and does not include the second storage device.

In another possible implementation of the eighth aspect, ownership information of the first file is an identifier of the second storage device. Before the first change, the storage layout information of the first file includes an identifier of the first storage device and does not include the identifier of the second storage device.

The metadata update module is further configured to:
add an identifier of the shared storage area to the storage layout information of the first file.

In still another possible implementation of the eighth aspect, the first file belongs to a target file system. The metadata of the first file is included in metadata of the target file system. The metadata of the target file system is synchronized between a plurality of devices. The plurality of devices include a first computing device.

In still another possible implementation of the eighth aspect, the communication module is further configured to:
send a first notification, where the first notification indicates that the metadata of the first file is changed.

In still another possible implementation of the eighth aspect, the metadata of the target file system is a streaming structure and includes a plurality of metadata records. Each metadata record includes an identifier of one node and an attribute of the node. The node is a file or a directory. The attribute of the node includes ownership information of the node and storage layout information of the node.

The metadata update module is configured to:
append a first metadata record to an end of the metadata of the target file system, where the first metadata record includes an identifier of the first file and the storage layout information of the first file, and the storage layout information of the first file indicates that the storage device storing the first file includes the first storage device and the shared storage area.

In still another possible implementation of the eighth aspect, the computing apparatus includes a deletion control module. The deletion control module is configured to delete the data of the first file from the first storage device when metadata that is of the first file and that is obtained through a second change is obtained. The second change indicates a change of the storage layout information of the first file. After the second change, the storage layout information of the first file indicates that the storage device storing the first file includes the first storage device and includes the second storage device.

The metadata update module is configured to perform a third change on the metadata of the first file. The third change indicates to delete the first storage device from the storage device indicated by the storage layout information of the first file. After the third change, the storage layout information of the first file indicates that the storage device storing the first file does not include the first storage device.

In still another possible implementation of the eighth aspect, the deletion control module is further configured to:
mark the data of the first file as deletable, so that when the data of the first file is in a deletable state, an operation of deleting the first file is performed.

According to a ninth aspect, an embodiment of this application provides a data migration system. The data migration system includes a first computing device and a second computing device. The first computing device is located in a first storage device or the first computing device is connected to a first storage device. The second computing device is located in a second storage device or the second computing device is connected to a second storage device.

The first storage device is configured to implement the method according to any one in the second aspect or the fourth aspect. The second storage device is configured to implement the method according to any one in the third aspect.

Alternatively, the first storage device includes the computing apparatus according to any one in the sixth aspect or the eighth aspect. The second storage device includes the computing apparatus according to any one in the seventh aspect.

In a possible implementation of the ninth aspect, the data migration system further includes a migration scheduling apparatus. The migration scheduling apparatus is configured to implement the method according to any one in the first aspect.

In still another possible implementation of the ninth aspect, the data migration system further includes a migration scheduling apparatus. The computing device is the migration scheduling apparatus according to any one in the fifth aspect.

According to a tenth aspect, an embodiment of this application provides a data migration system. The data migration system includes a first computing device and a second computing device. The first computing device is located in a first storage device or the first computing device is connected to a first storage device. The second computing device is located in a second storage device or the second computing device is connected to a second storage device.

The first computing device is configured to:
obtain metadata of a first file, where the metadata of the first file includes ownership information of the first file and storage layout information of the first file; and
push data of the first file to a shared storage area when it is determined that a storage device indicated by ownership information of the first file is the second storage device and storage layout information of the first file indicates that a storage device storing the first file does not include the second storage device but includes the first storage device, where the shared storage area is connected to the first computing device and the second computing device, and the second computing device is located in the second storage device or is connected to the second storage device.

The second computing device is configured to: pull the data of the first file from the shared storage area.

In a possible implementation of the tenth aspect, the data migration system further includes a migration scheduling apparatus. The migration scheduling apparatus is configured to implement the method according to any one in the first aspect. Alternatively, the migration scheduling apparatus is the migration scheduling apparatus according to any one in the fifth aspect.

For a possible implementation of the tenth aspect, refer to the possible implementations of the first to the ninth aspects.

According to an eleventh aspect, an embodiment of this application provides a data migration system. The data migration system includes a first computing device and a second computing device. The first computing device is located in a first storage device or the first computing device is connected to a first storage device. The second computing device is located in a second storage device or the second computing device is connected to a second storage device.

The second computing device is configured to:
obtain metadata of a first file, where the metadata of the first file includes ownership information of the first file and storage layout information of the first file; and
send a pull request to the second storage device when the ownership information of the first file indicates that a storage device to which the first file belongs is the second storage device and the storage layout information of the first file indicates that a storage device storing the first file does not include the second storage device, where the pull request indicates the first computing device to push data of the first file.

The first computing device is configured to:
receive the pull request for the first file from the second computing device; and
push the data of the first file to a shared storage area.

The second computing device is further configured to:
pull the data of the first file from the shared storage area.

In a possible implementation of the eleventh aspect, the data migration system further includes a migration scheduling apparatus. The migration scheduling apparatus is configured to implement the method according to any one in the first aspect. Alternatively, the migration scheduling apparatus is the migration scheduling apparatus according to any one in the fifth aspect.

For a possible implementation of the eleventh aspect, refer to the possible implementations of the first to the ninth aspects.

According to a twelfth aspect, an embodiment of this application provides a data migration system. The data migration system includes a first computing device and a second computing device. The first computing device is located in a first storage device or the first computing device is connected to a first storage device. The second computing device is located in a second storage device or the second computing device is connected to a second storage device.

The first computing device is configured to:
obtain metadata of a first file, where the metadata of the first file includes ownership information of the first file and storage layout information of the first file; and
push data of the first file to the second computing device when the ownership information of the first file indicates that a storage device to which the first file belongs is the second storage device and the storage layout information of the first file indicates that a storage device storing the first file does not include the second storage device.

The second computing device is configured to:
receive the data that is pushed by the first computing device and that is of the first file.

In a possible implementation of the twelfth aspect, the data migration system further includes a migration scheduling apparatus. The migration scheduling apparatus is configured to implement the method according to any one in the first aspect. Alternatively, the migration scheduling apparatus is the migration scheduling apparatus according to any one in the fifth aspect.

For a possible implementation of the twelfth aspect, refer to the possible implementations of the first to the ninth aspects.

According to a thirteenth aspect, an embodiment of this application provides a data migration system. The data migration system includes a first computing device and a second computing device. The first computing device is located in a first storage device or the first computing device is connected to a first storage device. The second computing device is located in a second storage device or the second computing device is connected to a second storage device.

The second computing device is configured to:
obtain metadata of a first file, where the metadata of the first file includes ownership information of the first file and storage layout information of the first file; and
send a pull request to the second storage device when the ownership information of the first file indicates that a storage device to which the first file belongs is the second storage device and the storage layout information of the first file indicates that a storage device storing the first file does not include the second storage device, where the pull request indicates the first computing device to push data of the first file.

The first computing device is configured to:
receive the pull request for the first file from the second computing device; and
push the data of the first file to the second computing device.

The second computing device is further configured to:
receive the data that is pushed by the second computing device and that is of the first file.

For a possible implementation of the thirteenth aspect, refer to the possible implementations of the first to the ninth aspects.

According to a fourteenth aspect, an embodiment of this application provides a computing device. The computing device includes a processor and a memory. The processor executes instructions stored in the memory, to enable the computing device to implement the method according to any one in the first aspect.

Optionally, the computing device further includes a communication interface. The communication interface is configured to receive and/or send data, and/or the communication interface is configured to provide an input and/or an output for the processor.

It should be noted that, in the foregoing embodiment, the processor (or referred to as a general-purpose processor) that performs the method by invoking the computer instructions is used as an example for description. In a specific implementation process, the processor may alternatively be a dedicated processor. In this case, the computer instructions are already preloaded on the processor. Optionally, the processor may alternatively include both a dedicated processor and a general-purpose processor.

Optionally, the processor and the memory may be further integrated into one component, that is, the processor and the memory may be further integrated together.

According to a fifteenth aspect, an embodiment of this application further provides a computing device cluster. The computing device cluster includes at least one computing device. Each computing device includes a processor and a memory.

The processor of the at least one computing device is configured to execute instructions stored in the memory of the at least one computing device, to enable the computing device cluster to perform the method according to any one in the first aspect.

According to a sixteenth aspect, an embodiment of this application provides a computing device. The computing device includes a processor and a memory. The memory is configured to store computer instructions. The processor is configured to execute the computer instructions stored in the memory, to enable the computing device to implement the method according to any one in the second aspect or the fourth aspect.

According to a seventeenth aspect, an embodiment of this application provides a storage device. The storage device includes a computing device and a storage disk connected to the computing device. Connecting may be connecting through a wired line, or may be connecting through a wireless line. For example, the computing device and the storage disk are connected through a bus. For another example, the computing device and the storage disk are connected via a switch. The computing device may be the computing device according to the sixteenth aspect.

According to an eighteenth aspect, an embodiment of this application provides a storage device. The storage device includes a computing device and a storage disk connected to the computing device. The memory is configured to store computer instructions. The processor is configured to execute the computer instructions stored in the memory, to enable the computing device to implement the method according to any one in the third aspect.

According to a nineteenth aspect, an embodiment of this application provides a storage device. The storage device includes a computing device and a storage disk connected to the computing device. Connecting may be connecting through a wired line, or may be connecting through a wireless line. For example, the computing device and the storage disk are connected through a bus. For another example, the computing device and the storage disk are connected via a switch. The computing device may be the computing device according to the eighteenth aspect.

According to a twentieth aspect, an embodiment of this application provides a computer-readable storage medium. The computer-readable storage medium stores instructions. When the instructions are run on at least one processor, the method according to any one in the first aspect is implemented, the method according to any one in the second aspect is implemented, the method according to any one in the third aspect is implemented, or the method according to any one in the fourth aspect is implemented.

According to a twenty-first aspect, this application provides a computer program product. The computer program product includes computer instructions. When the instructions are run on at least one processor, the method according to any one in the first aspect is implemented, the method according to any one in the second aspect is implemented, the method according to any one in the third aspect is implemented, or the method according to any one in the fourth aspect is implemented.

Optionally, the computer program product may be a software installation package or an image package. When the foregoing method needs to be used, the computer program product may be downloaded, and the computer program product is executed on a computing device.

For beneficial effects of the technical solutions provided in the third aspect to the twenty-first aspect of this application, refer to the beneficial effects of the technical solutions in the first aspect and/or the second aspect. Details are not described herein again.

### BRIEF DESCRIPTION OF DRAWINGS

The following briefly describes the accompanying drawings used for describing embodiments.
FIG. 1 is a diagram of an architecture of a data migration system according to an embodiment of this application;
FIG. 2 is a diagram of an architecture of a storage device according to an embodiment of this application;
FIG. 3 is a diagram of an architecture of another data migration system according to an embodiment of this application;
FIG. 4 is a diagram of an operating scenario of a data migration system according to an embodiment of this application;
FIG. 5 is a view of a global file system according to an embodiment of this application;
FIG. 6 is a diagram of a metadata stream according to an embodiment of this application;
FIG. 7 is a diagram of a change of a metadata table according to an embodiment of this application;
FIG. 8 is a schematic flowchart of a data migration method according to an embodiment of this application;
FIG. 9 is a diagram of a change of metadata of a first file according to an embodiment of this application;
FIG. 10 is a schematic flowchart of another data migration method according to an embodiment of this application;
FIG. 11 is a diagram of another change of metadata of a first file according to an embodiment of this application;
FIG. 12 is a schematic flowchart of still another data migration method according to an embodiment of this application;
FIG. 13 is a diagram of a structure of a migration scheduling apparatus according to an embodiment of this application;
FIG. 14 is a diagram of a structure of a computing apparatus according to an embodiment of this application; and
FIG. 15 is a diagram of a structure of a computing device according to an embodiment of this application.

### DESCRIPTION OF EMBODIMENTS

The following describes embodiments of this application in detail with reference to the accompanying drawings.

For ease of understanding, the following provides, for reference, example descriptions of some concepts related to embodiments of this application. Details are as follows.
1. File system: The file system is a method and a data structure that are used to specify a file in a storage disk (for example, a magnetic disk, a solid state drive, or a partition), namely, a method for organizing a file in the storage disk. A main function of the file system is to enable a user to conveniently read and write the file. For example, the user provides an identifier (for example, a name of the file or a path of the file) of a specified file for the file system, and the file system may access data of the corresponding file.
2. File, data, and metadata: The file, also referred to as a computer file, is an information set. The file includes the data and the metadata. The data is data content of the file. The metadata is information describing the file, for example, a file name, a file size, and a file type.
   For example, the data of the file is generally unstructured data like data without a fixed structure, for example, a document, a picture, a video, or an audio.
3. Ownership: Metadata of a file may include ownership information. The ownership information is used to specify a home device of the file, for example, a storage device to which the file belongs. The home device of the file is configured for management data of the file, including but not limited to one or more of maintaining latest complete data of the file, publishing a data change when the data of the file is changed, issuing data (for example, returning the data to an application that requests the data), and the like.
   It should be noted that metadata of a directory may also include ownership information that is used to specify a home device of the directory.
4. Message queue
   The message queue is a data structure, and may be understood as a list including one or more messages. The message is stored in the message queue before being processed and deleted. A message sender may interact with a message receiver by using a message queue service. It should be understood that, for ease of description, in this application, a data structure including a plurality of messages is collectively referred to as a message queue, and this is not intended to limit implementing the message queue in a manner of a queue. For example, in a specific implementation process, the message queue may alternatively be implemented in a manner of a list, a heap, a linked list, or a stack.
5. Data migration and data tiering
   Data migration means a process of migrating data from a device (source device) to another device (destination device).

Data tiering, also referred to as hierarchical storage management (Hierarchical Storage Management, HSM), means a process of migrating the data from the device (source device) to the another device (destination device) and deleting the data from the source device. In a data tiering process, the source device and the destination device are usually at different levels (or have different storage capabilities). For example, costs or data access speeds of the source device and the destination device are different.

Generally, data migration does not focus on how the source device subsequently processes the data stored in the source device. However, data tiering requires that the data stored in the source device is deleted to release storage space.

Certainly, in some scenarios, data migration and data tiering may be replaced with each other. For ease of understanding, data migration is uniformly used for description in this application.

The foregoing example explanations of the terms may be applied to the following embodiments. It should be noted that the following file system is a system that provides a storage and access service for data. In some scenarios, a name of a system having a similar feature may not be necessarily referred to as a file system. In this application, for ease of description, migration of data in the file system is used as an example for description. This application is also applicable to another similar system.

For example, when storing an object, some object systems may store and access data by using an object format. The data stored in the object form also has corresponding metadata. Embodiments of this application are also applicable to the object system.

Embodiments of this application provide a data migration method and apparatus. In this method, migration for data of a file is triggered based on a change (for example, a change for metadata like ownership and a storage layout of the file) of the metadata of the file. In addition, migration progress of the data of the file can also be reflected by using a status of the metadata of the file. A migration scheduling apparatus does not need to establish access security control between a source device and a destination device for migration. This simplifies a security control procedure of data migration. The source device and the destination device update ownership information and storage layout information of the file, to indicate, to each other, operations completed by the source device and the destination device. This can improve data migration efficiency, and improve convenience in data use and management. In conclusion, in embodiments of this application, not only data migration efficiency can be improved, but also devices are decoupled in a migration process, to greatly improve flexibility and scalability of a service system.

The following provides example descriptions of a system architecture in embodiments of this application.

It should be noted that the system architecture described in this application is intended to describe the technical solutions in this application more clearly, but constitutes no limitation on the technical solutions provided in this application. Persons of ordinary skill in the art may know that, with evolution of the system architecture and emergence of a new service scenario, the technical solutions provided in this application are also applied to a similar technical problem.

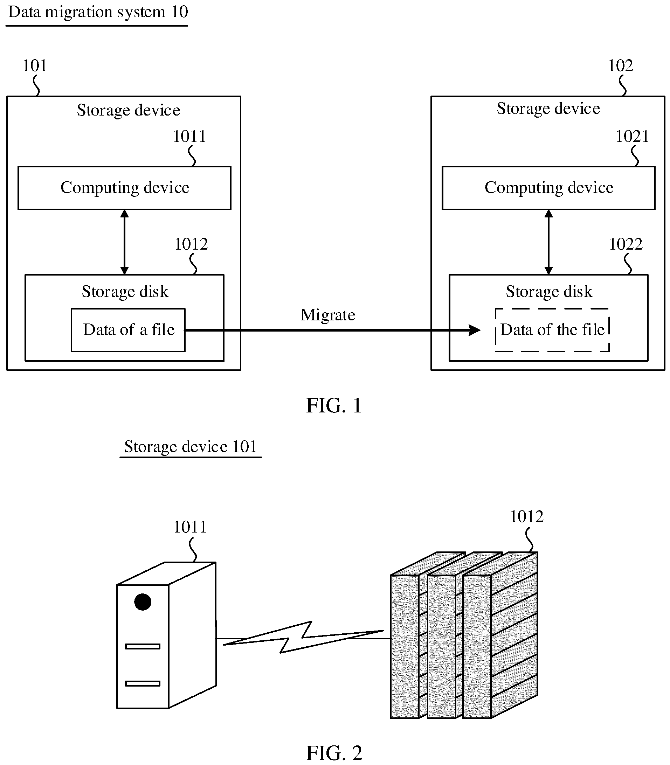

FIG. 1 is a diagram of an architecture of a data migration system according to an embodiment of this application. The data migration system 10 includes a storage device 101 and a storage device 102.

The storage device 101 can provide storage space and has a data storage capability. The storage device 101 includes a computing device 1011 and a storage disk 1012. The computing device 1011 is connected to the storage disk 1012. The computing device 1011 has a computing capability. The storage disk 1012 is configured to provide storage space, and the storage disk 1012 may store data of a file. The storage disk 1012 includes but is not limited to a hard disk, a random access memory, a read-only memory (Read Only Memory, ROM), or the like. Alternatively, the storage disk may be virtual, for example, is a virtual storage pool.

Optionally, the computing device 1011 can complete one or more of the following functions: obtaining metadata of a file, controlling read and write of data in the storage disk 1012, changing the metadata, and the like.

Similarly, the storage device 102 includes a computing device 1021 and a storage disk 1022. The computing device 1021 is connected to the storage disk 1022. The computing device 1021 has a computing capability. The storage disk 1022 is configured to provide storage space. For descriptions of the computing device 1021 and the storage disk 1022, refer to the foregoing descriptions of the computing device 1011 and the storage disk 1012.

The data of the file often needs to be migrated across a device. For example, the data of the file stored in the storage device 101 is migrated to the storage device 102.

In embodiments of this application, data migration may be controlled based on a file status. Specifically, the metadata of the file includes ownership information and storage layout information of the file. The ownership information indicates a home device of the file, for example, indicates a storage device to which the file belongs. The storage layout information of the file indicates a device storing the file. In the system shown in FIG. 1, the home device of the file is the storage device 101. In addition, because the data of the file is stored in the storage device 101, the storage layout information of the file indicates the storage device 101. In this case, migration of the data of the file may be triggered by changing the ownership information of the file. For example, when the ownership information of the file is changed from indicating the storage device 101 to indicating the storage device 102, the storage device 101 and/or the storage device 102 are/is triggered to migrate the data of the file from the storage device 101 to the storage device 102.

In this way, a data migration operation can be triggered provided that a device has a capability of changing the metadata of the file, and security control of data access between a source device (a device from which the data is migrated) and a destination device (a device to which the data is migrated) does not need to be established for migration. This simplifies a security control procedure of data migration, improves data migration efficiency, and improves convenience in data use and management for a user. Especially for a service that includes a plurality of storage devices or a plurality of data centers, functions of the devices can be further decoupled through status-based data migration, to greatly improve flexibility and scalability of a service system.

In a possible implementation, in a process of migrating the data of the file, the storage device 101 may push the data of the file to a specified device, so that the storage device 102 obtains the file from the specified device, to implement data migration. The specified device may be a user-defined device, and can provide a data storage service (also referred to as a shared storage area) for the storage device 101 and the storage device 102. Optionally, the data storage service may be provided by using a global data service, or may be provided by a third-party temporary storage device or an intermediate device.

It should be understood that, in the data migration system shown in FIG. 1, computing devices (for example, the computing device 1011 and the computing device 1021) in storage devices may be implemented by using software and/or hardware.

In an example in which the computing device is implemented by using the hardware, the computing device may be a controller, a processor, a server, or the like. The controller includes but is not limited to a storage controller (for example, a memory controller, a hard disk controller, an integrated drive, an electronic controller, or a disk array controller), a combined logic controller, a hardwired controller, and the like. The processor includes but is not limited to a central processing unit, a picture processor, an artificial intelligence processor, a microprocessor, a programmable logic gate array, or the like. In addition, in some scenarios, because the controller also has a computing capability and/or can execute an instruction, the controller may also be considered as a processor. The server includes but is not limited to a general-purpose computer, a storage server, a cloud server, a blade server, or the like. When a function of the computing device is implemented by a server, the computing device may include one or more servers (for example, a server cluster).

In a possible solution, a function implemented by the computing device may be implemented by using a software functional unit. For example, the computing module may be a virtual machine, a container, or a cloud. The virtual machine is a computer system that is simulated by using software and that has a complete hardware system function and runs in an isolated environment. The container is an isolated environment obtained by packaging an application and an application dependency package. The cloud is a software platform that uses an application virtualization technology, and can enable one or more pieces of software and applications to be developed and run in an independent virtualized environment. Optionally, the cloud may be deployed on a public cloud, a private cloud, a hybrid cloud, or the like.

In an example of the software functional unit, the computing device may include code run on a computing instance. The computing instance may include at least one of a physical host (computing device), a virtual machine, and a container.

Optionally, the computing device and a storage disk in the storage device may be integrated. In an example in which the computing device and the storage disk are integrated, the storage device is a storage system in which a disk and a controller are integrated, the storage device includes a controller (there may be one or more controllers), and the controller is connected to the storage disk (for example, a hard disk) through a bus. The controller may be configured to process a data access request from an outside (a server or another storage system) of the storage device, and may also be configured to process a request generated inside the storage device. For example, when receiving a data write request sent by an application server, the controller may send, to the storage disk for storage, data carried in the data write request. In this case, optionally, the computing device may be the controller in the storage device.

Alternatively, optionally, the computing device and the storage disk may be disposed independently. FIG. 2 is a diagram of a possible architecture of the storage device according to an embodiment of this application. The computing device 1021 in the storage device 101 is an independent device, and the storage disk 1022 is located outside the computing device 1021.

Certainly, regardless of whether the computing device and the storage disk are independently disposed or integrated into a same device, the computing device and the storage disk are connected to each other in a connection manner of a bus, a network, or the like. For example, the network is a wired network, a wireless network, or a combination of a wired network and a wireless network. For example, the computing device and the storage disk may be connected through a network cable, or may be connected via a switch.

In the foregoing descriptions, the change of the ownership information of the file may be performed by the storage device 101, may be performed by the storage device 102, or may be performed by another device.

In a possible solution, the data migration system further includes a migration scheduling apparatus. The migration scheduling apparatus is configured to determine a migration task and change the metadata of the file based on the migration task.

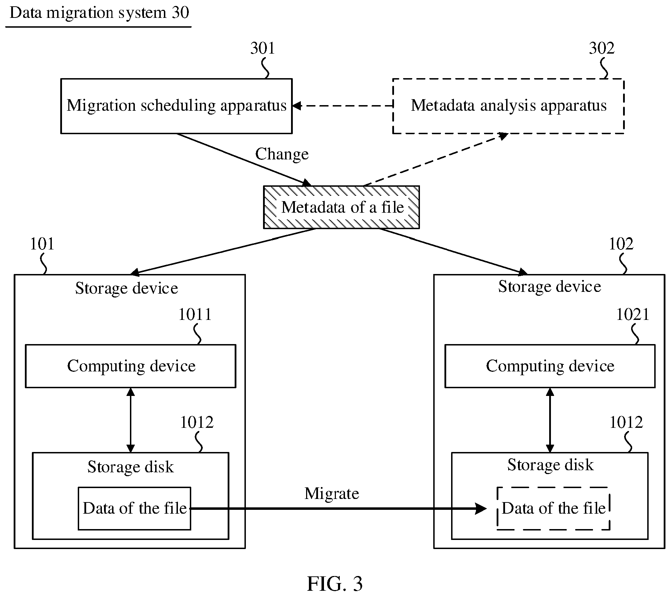

FIG. 3 is a diagram of an architecture of another data migration system according to an embodiment of this application. The data migration system 30 includes the storage device 101, the storage device 102, and a migration scheduling apparatus 301.

The migration scheduling apparatus 301 may change the metadata of the file, and the change of the metadata may be obtained by the storage device 101 and/or the storage device 102, to trigger migration of the data of the file. In some scenarios, the migration scheduling apparatus may also be referred to as a data scheduling engine.

In a possible implementation, the migration scheduling apparatus 301 may determine a migration task for the file based on input information, and change the metadata based on the migration task. For example, the input information may be one or more of external event information, an indication input by the user, and a metadata analysis result.

Optionally, the migration scheduling apparatus 301 may include a migration policy module. The migration policy module is configured to implement hierarchical migration policies. These migration policies may be defined by using a predefined algorithm (for example, an AI module) or a preset rule. Further, the migration policy module may further determine the migration task based on the input information and the hierarchical migration policy.

There may be a plurality of tasks determined by the migration scheduling apparatus 301. The plurality of tasks may be for a same file or for different files. A success rate and efficiency of executing the task is affected by whether there is a conflict between the tasks and an execution sequence of the tasks. In a possible solution, the migration scheduling apparatus 301 may include a task orchestration module. The task orchestration module is configured to orchestrate the plurality of tasks. Further, orchestrating the tasks may include determining an execution sequence, execution priorities, and the like of the tasks, for example, determining which file is to be migrated first. In addition, the migration scheduling apparatus may further merge the plurality of tasks in a process of orchestrating the tasks.

Optionally, the migration scheduling apparatus 301 may include a migration task management module. The migration task management module is configured to trace execution progress of the task, to obtain an execution status of the task. In addition, a task that is slow in progress or fails to be executed or the like is handled as quickly as possible, to improve system stability.

In a possible implementation, the data migration system 30 further includes a metadata analysis apparatus 302. In some scenarios, the metadata analysis apparatus is also referred to as a metadata analysis engine. It should be understood that the migration scheduling apparatus 301 may also be implemented by using software and/or hardware, and the metadata analysis apparatus 302 may also be implemented by using software and/or hardware. Optionally, the migration scheduling apparatus 301 and the metadata analysis apparatus 302 may be disposed independently, or may be integrated into a same device.

The metadata analysis apparatus 302 is configured to: analyze the metadata of the file, and provide an analysis result for the migration scheduling apparatus 301. The migration scheduling apparatus determines the migration task for the file based on the analysis result. For example, the analysis result includes one or more of the following information: a cold or hot state of the file, security of the file, and a service related to the file.

The following describes a possible operating scenario of the data migration system by using an example in which the data is migrated based on the cold or hot state of a file.

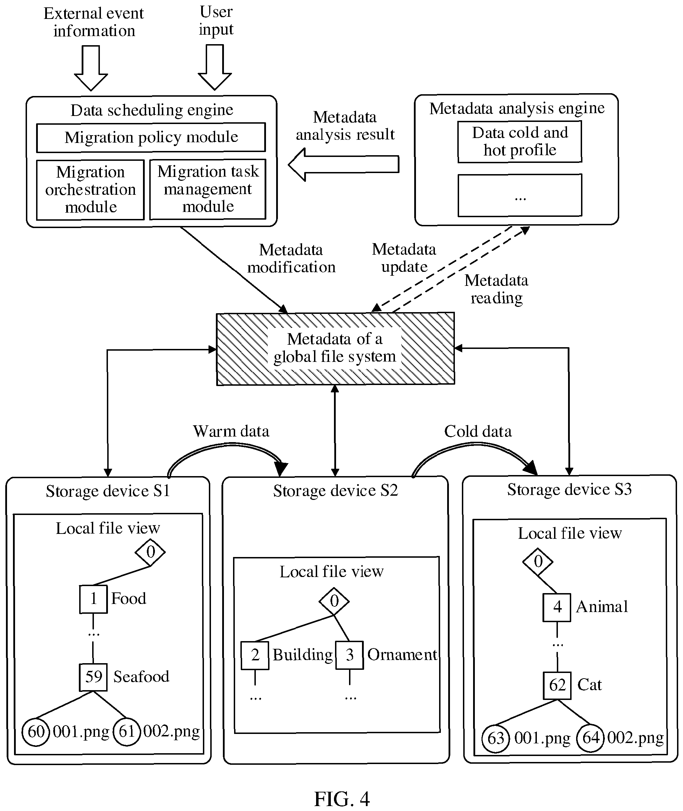

FIG. 4 is a diagram of the operating scenario of the data migration system according to an embodiment of this application. The data scheduling engine includes one or more of the migration policy module, the task coding module, and the migration task management module. For related descriptions, refer to the foregoing descriptions. The data scheduling engine may determine the migration task for the file based on one or more of the external event information, a user input, and the metadata analysis result.

The metadata analysis engine may include a cold and hot data profile module. The cold and hot data profile module is configured to determine a cold-hot degree of the data of the file in a file system. For example, the cold-hot degree of the data includes three levels: hot data, warm data, and cold data. The hot data is data that is accessed most frequently, the warm data is accessed more frequently, and the cold data is accessed least frequently.

The metadata of the file may be included in metadata of a global file system. The global file system is a file system obtained by uniting files (or file systems) in a plurality of storage devices, and is also referred to as a union file system.

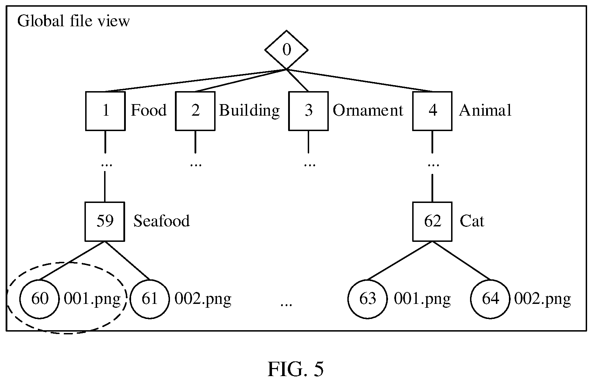

FIG. 4 is used as an example. A file system in a storage device S1, a file system in a storage device S2, and a file system in a storage device S3 may be united to obtain the global file system. FIG. 5 is a possible view of the global file system. For ease of understanding, a directory is represented by using a block (for ease of differentiation, a root directory is a rhombic) pattern, and a file is represented by using a circular pattern. Certainly, this is not intended to mean that files and directories are different in storage mode and presentation mode. A number in the middle of a shape is a node number corresponding to the directory and the file. A name outside the shape is a name of the directory or a name of the file. It should be understood that the node number, an arrangement sequence of the files (or directories), the name of the file (or directory), and the like are merely examples, and are not intended to limit this application.

In an example, the storage device S1 is a storage device featured with a high access speed. The storage device S3 is a storage device featured with a large capacity. The storage device S2 is a storage device with a medium capacity and a medium access speed. It is not difficult to learn that the storage device S1 is applicable to storing the hot data, and is conducive to implementing high-speed storage of the file. The storage device S2 is used to store the warm data. The storage device S1 is used to store the cold data.

In this case, the metadata analysis engine may provide the cold-hot degree of the data for the data scheduling engine. Correspondingly, the data scheduling engine determines the migration task for the file based on the cold-hot degree of the data, and modifies the metadata of the file based on the migration task. After obtaining modified metadata of the file, the storage devices perform data migration based on a change of the metadata. The hot data is migrated to the storage device S1 for storage. The warm data is migrated to the storage device S2 for storage. The cold data is migrated to the storage device S3 for storage. This achieves optimal access performance and optimal storage costs of the data.

For example, when data of a file whose file name is "001.png" (currently stored in the storage device S1) becomes warm data, the data scheduling engine changes a home device of the file whose file name is "001.png" to the storage device S2. In this way, the data of the file is migrated to the storage device S2 for storage.

For another example, when data of a file whose file name is "002.png" (currently stored in the storage device S1) becomes cold data, the data scheduling engine changes a home device of the file whose file name is "002.png" to the storage device S3. In this way, the data of the file is migrated to the storage device S3 for storage.

The metadata of the file system is mentioned in the foregoing descriptions of the architecture. The following describes a format of the metadata of the file system.

The metadata of the file is included in the metadata of the file system. Because an attribute of the file is changed, the metadata of the file system needs to support a dynamic change of the metadata.

In a possible implementation, the metadata of the file system is a streaming structure and includes a plurality of metadata records. Each metadata record includes an identifier of the file and the attribute of the file. For example, the attribute of the file is one or more of ownership information of the file, storage layout information of the file, a creation time point of the file, and the like.

The streaming structure is a data structure including a plurality of pieces of information, and each piece of information is one metadata record. The streaming structure has the following features: read-only, append-only, and orderliness. "Read-only" means that a value of the record in the streaming structure can only be read but cannot be modified. "Append-only" indicates that only a new record can be appended to the streaming structure but an existing record cannot be deleted (or modified), but a plurality of records belonging to a same file (or directory) may be merged into one record. "Orderliness" means that the records in the streaming structure have a logical sequence, and a to-be-appended record is added at an end of the streaming structure.

In the metadata (referred to as a metadata stream below) of the streaming structure, when the metadata of the file in the file system is changed, one metadata record is appended to an end of the metadata stream. Another device may obtain the change of the attribute of the file by reading the metadata record newly added at the end of the metadata stream.

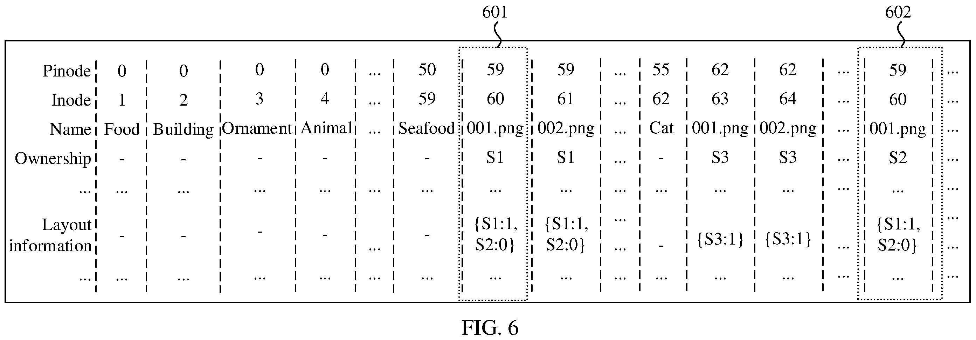

FIG. 6 is a diagram of a metadata stream according to an embodiment of this application. As shown in a metadata record 601, for a file whose file name is "001.png", a value of an ownership attribute includes an identifier (namely, S1) of a storage device S1, and storage layout information is {S1:1, S2:0}, indicating that the storage device S1 stores data of the file but a storage device S2 does not store the data of the file. In other words, the file belongs to the storage device S1, and the data of the file is stored in the storage device S1.

When a home device of "001.png" is changed, a metadata record 602 is appended to an end of a metadata stream. In the metadata record 602, ownership information of the file is already changed to an identifier (namely, S2) of the storage device S2. The ownership information of the file is already changed, but the data of the file is still stored in the storage device S1. Therefore, the data of the file needs to be migrated from the storage device S1 to the storage device S2.

Correspondingly, when reading the newly added record from the metadata stream, the storage device S1 and/or the storage device S1 performs a migration operation in response to the change of the home device of the file.

In another possible implementation, the metadata of the file system is of a tabular structure. The metadata (referred to as a metadata table below) of the tabular structure includes a row and a column. Each row (or each column) includes values of a plurality of attributes, and a value of each attribute corresponds to one attribute. A row (or a column) of metadata may be added to or deleted from the metadata table, or a value of an existing attribute in the metadata may also be modified.

In the metadata (referred to as the metadata table below) of the tabular structure, when the metadata of the file in the file system is changed, an original value of a field in the metadata table is modified. Another device obtains the change of the attribute of the file by obtaining a modified value of the metadata of the file.

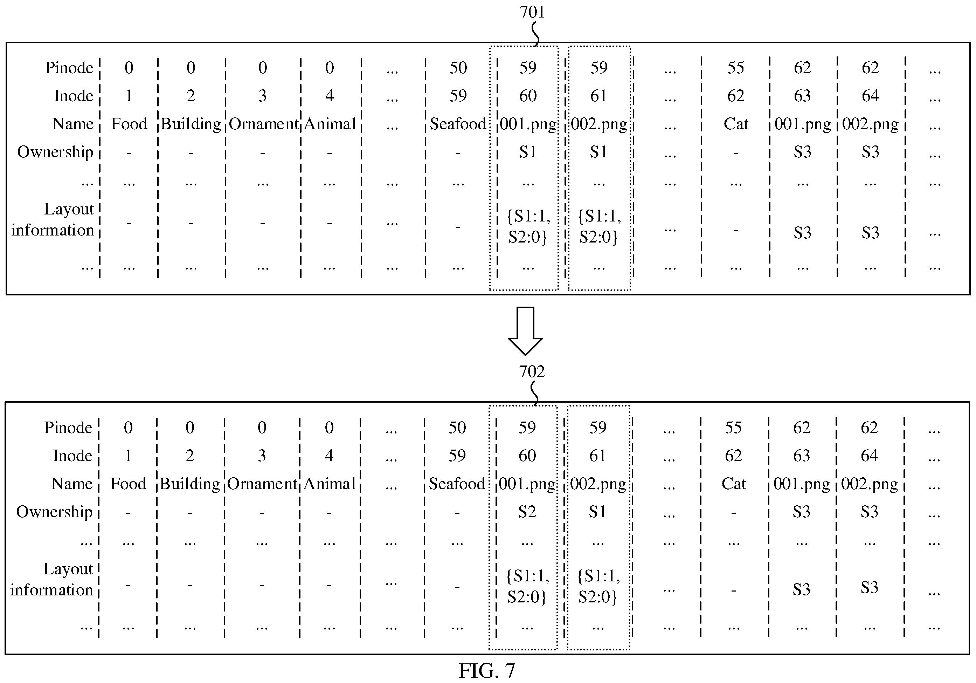

FIG. 7 is a diagram of a change of a metadata table according to an embodiment of this application. As shown in a column 701, for a file whose file name is "001.png", ownership includes an identifier (namely, S1) of a storage device S1, and storage layout information is {S1:1, S2:0}, indicating that the storage device S1 stores data of the file but a storage device S2 does not store the data of the file. In other words, the file belongs to the storage device S1, and the data of the file is stored in the storage device S1.

When a home device of "001.png" is changed, an attribute in the column 701 is changed, and column 702 is obtained. It can be learned that ownership information of the file is already changed to an identifier (namely, S2) of the storage device S2, but the data of the file is still stored in the storage device S1. Therefore, the data of the file needs to be migrated from the storage device S1 to the storage device S2.

Correspondingly, after determining, based on the metadata table, that the ownership information of the file is changed, the storage device S1 and/or the storage device S1 performs a migration operation in response to the change of the ownership information of the file.

It should be noted that, in the metadata shown in FIG. 6 and FIG. 7, ownership information of a directory is not shown. In an actual use process, the directory may also have ownership information that indicates a home device of the directory. In a possible design, the directory may belong to a specified device. To be specific, the specified device maintains the directory in the file system in a unified manner.

It should be understood that the foregoing format of the metadata of the file system is merely an example. In a specific implementation process, the metadata of the file system may be in another format.

The foregoing describes the architecture and the format of the metadata of the file system in embodiments of this application. The following describes a method in embodiments of this application in detail.

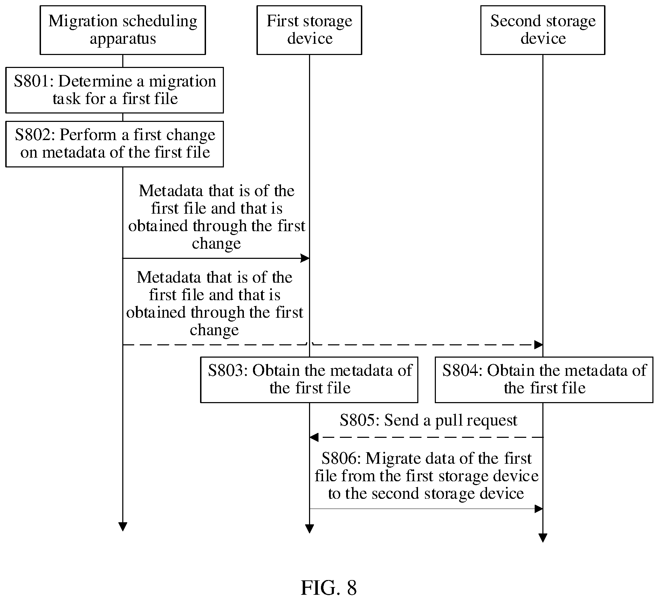

FIG. 8 is a schematic flowchart of a data migration method according to an embodiment of this application. Optionally, the method may be applied to the foregoing data migration system, for example, the data migration system shown in FIG. 1, FIG. 3, or FIG. 5.

The data migration method shown in FIG. 8 may include one or more of step S801 to step S806. It should be understood that, for ease of description in this application, a sequence of S801 to S806 is used for description, but this is not intended to limit execution that is necessary in the foregoing sequence. An execution sequence, an execution time point, a quantity of execution times, and the like of the foregoing one or more steps are not limited in embodiments of this application. Step S801 to step S806 are specifically as follows.

Step S801: A migration scheduling apparatus determines a migration task for a first file.

The migration task indicates to migrate the first file from a first storage device to a second storage device. It should be understood that the first file may be one file, or may be a plurality of files. For example, the migration task indicates to migrate data of a plurality of files in a directory to the second storage device.

In a possible implementation, the migration task includes an identifier of the first file, an identifier of the first storage device, and an identifier of the second storage device. The identifier of the first file indicates the file that the migration task is for or a directory to which the file belongs. The identifier of the first storage device is an identifier of a migration source device. The identifier of the second storage device is an identifier of a migration destination device.

Optionally, the migration scheduling apparatus may determine the migration task for the file based on input information. The following enumerate examples of several designs in which the migration task is determined based on the input information.

Design 1: The migration scheduling apparatus determines the migration task for the first file based on external event information.

An external event is an event that occurs outside the migration scheduling apparatus and/or a service system. The external event information includes but is not limited to one or more of a network connection status, a device health status, and a person transfer status.

The network connection status can be understood as an online status, and is used to describe whether a device can be sensed by another device. For example, when communication of a line is interrupted, and it is predicted that communication in a place A is affected (or a device in a place A may not be sensed, or a communication rate is affected), data in the place A may be migrated to a place B.

The device health status may describe a current storage capability of a device or a current fault status of a device. For example, an access speed of the device may decrease with use duration and a quantity of use times. For a storage device, when an access speed reaches a preset lower limit, or use duration reaches preset duration, or a quantity of use times reaches a preset quantity of times, data in the storage device is migrated to another storage device. For another example, when a storage device is faulty, data in the storage device is migrated to another storage device.

The person transfer status related to the first file includes a change in a location of a data owner or a data manager. For example, when a person in a research and development group for a service is on a business trip in a different place, migration may be triggered, to migrate data of the service to a storage device that is closer to a business trip destination.

In a specific implementation process, the migration scheduling apparatus may determine the migration task according to a preset data migration policy and based on the external event. A data migration policy may be an algorithm, a preset rule, a condition set by a user, or the like.

In this design, when the external event information meets a condition for triggering data migration, the corresponding migration task is determined. This implements intelligent migration of a plurality of integrated information streams, and improves user experience.

Optionally, the condition for triggering data migration may be defined according to a migration policy. The migration policy may be implemented based on an algorithm or according to a rule.

Design 2: The migration scheduling apparatus determines the migration task for the first file based on a metadata analysis result. The metadata analysis result is a result obtained by analyzing metadata of the first file (or metadata of a target file system). The metadata analysis result includes but is not limited to one or more of a cold or hot state of the first file, security of the first file, a service related to the first file, or the like.

In an example, a cold or hot state of the metadata may be indicated by using an access frequency of the file. For example, the metadata of the first file includes an attribute indicating a quantity of access times within specific duration. If the quantity of access times is greater than or is greater than or equal to a first threshold, data of the first file is migrated to a device (for example, the second storage device) with a high storage speed. This improves efficiency of accessing the data of the first file, and improves system quality of service. Similarly, if the quantity of access times of the first file is less than or is less than or equal to a second threshold, data of the file is migrated to a device with a large storage capacity. This reduces storage costs. Optionally, the first threshold and the second threshold herein may be input by an administrator (for example, a developer or a management department), a vendor, or the like, or may be preset.

In an example, the metadata of the first file may include an attribute indicating a security level of the file. For example, if a security level of the first file is high, but a security level of the first storage device does not meet a security level requirement of the first file, the data of the first file is migrated to a device that can meet the security level requirement of the first file. This effectively ensures a security requirement of a user for the file, and improves system quality of service.

In an example, the metadata of the first file includes an attribute indicating the service related to the first file. For example, the service related to the first file is an in-vehicle service, a video service, or a file download service. For example, if the first file is used to store data of the in-vehicle service, the data of the first file is also correspondingly migrated when the data of the in-vehicle service needs to be migrated to the second storage device. In this way, the user can migrate the file based on different services. This improves convenience of managing service data by the user, and improves system quality of service.

In this design, the metadata analysis result can indicate a migration requirement (for example, an access requirement, a security requirement, or a service requirement) on the file. The migration task is determined based on the migration requirement, to implement overall storage optimization. In addition, the user can express the migration requirement on the file by updating the metadata of the file, to implement intelligent data management, and improve convenience in data use and management for the user.

Design 3: The migration scheduling apparatus determines the migration task based on a migration indication for the first file input by a user. For example, indication information input by the user indicates to migrate the data of the first file to the second storage device. The migration scheduling apparatus may determine the migration task for the first file in response to the indication information.

In this design, the user can implement migration of a file by inputting a migration instruction. This can meet a personalized requirement of the user, and improve user experience.

The foregoing three designs are merely examples. In a specific implementation process, the input information may further include other information. The foregoing three designs may also be combined when being not mutually exclusive. Details about the combination are not described herein again.

In some scenarios, the migration task for the first file is some of a plurality of tasks determined by the migration scheduling apparatus. In a possible solution, the migration scheduling apparatus may determine the plurality of tasks, and orchestrate the plurality of task. In this way, the plurality of tasks can be appropriately and orderly executed.

For example, the migration scheduling apparatus may determine a migration task for a second file, and orchestrate the migration task for the first file and the migration task for the second file.

In a possible implementation, orchestrating the tasks may include one or more of the following operations: determining an execution sequence of the tasks, determining execution priorities, merging the plurality of tasks, and the like.

For example, the data scheduling apparatus may determine, based on priorities of requirements, that migration tasks of some files are to be preferably performed. This improves user experience. For example, a file whose access frequency increases sharply in a short period of time may be preferably migrated, to improve an access rate of the file as quickly as possible, so as to improve user experience.

For example, a task A indicates to migrate the first file from the first storage device to the second storage device, and a task B indicates to migrate the first file from the first storage device to a third storage device. In this case, the task A and the task B may be merged to obtain a new task. The new task indicates to migrate the first file from the first storage device to the third storage device. In this way, in one aspect, a probability of a task execution error can be reduced. In another aspect, computing power consumption of task execution can be reduced. This effectively improves task execution efficiency, and improves user experience.

Step S802: The migration scheduling apparatus performs a first change on the metadata of the first file.

Specifically, the first change indicates to change, from the first storage device to the second storage device, a storage device to which the first file belongs.

In some possible scenarios, ownership of the first file is indicated by using ownership information. The ownership information includes an identifier of a home device of the file. For example, the ownership information of the file is the identifier of the first storage device, that is, identifies that the home device of the identification file is the first device. In this case, that the migration scheduling apparatus performs a first change on the metadata of the first file is specifically as follows: The migration scheduling apparatus changes the ownership information of the first file from the identifier of the first storage device to the identifier of the second storage device. For another example, the ownership information is indicated by using a value of a field. When a value of a field corresponding to the second storage device in the metadata of the first file is a first value, it indicates that the second storage device is the home device of the first file. The first value may be predefined or preconfigured.

In a possible implementation, the migration scheduling apparatus may change the metadata of the first file by changing the metadata of the target file system. The target file system herein is a file system to which the first file belongs. It should be understood that the target file system is a specific file system or a group of specific file systems.

Optionally, the metadata of the target file system is a streaming structure. In this case, the migration scheduling apparatus may perform the first change in a manner of appending a metadata record to a metadata stream. Specifically, the migration scheduling apparatus appends a first metadata record to an end of the metadata of the target file system. The first metadata record includes the identifier of the first file and the ownership information of the first file. The ownership information of the first file includes the identifier of the second storage device.

Alternatively, optionally, the metadata of the target file system is a tabular structure. In this case, the migration scheduling apparatus may modify the ownership information of the first file to the identifier of the second storage device by modifying the metadata of the first file in a metadata table of the target file system. In some possible designs, the metadata of the target file system is synchronized between a plurality of devices, or a plurality of devices share the metadata of the target file system. Synchronization herein means that the metadata of the target file system may be modified by any one of the plurality of devices, modified content can be learned by the plurality of devices, and the metadata of the target system learned by the plurality of devices is consistent. Therefore, when the migration scheduling apparatus performs the first change on the metadata of the first file, the device that shares the metadata of the target file system may obtain metadata that is of the first file and that is obtained through the first change.

Optionally, the metadata of the target file system is synchronized between the plurality of devices in the following several possible implementations.

Implementation 1: The metadata of the target file system is locally stored in the plurality of devices. When a device performs a change on the target file system, the device notifies the change to another device storing the metadata of the target file system. The another device correspondingly changes the locally stored metadata of the target file system based on the notification. This implements synchronization of the metadata of the target file system in the plurality of devices. It should be understood that the plurality of devices herein include the migration scheduling apparatus, the first storage device, and the second storage device.

For example, the migration scheduling apparatus, the first storage device, and the second storage device all locally store metadata of a first file system. When the migration scheduling apparatus performs the first change on the metadata of the first file in the metadata of the target file system, the migration scheduling apparatus may send a first notification. The first notification indicates that the first change occurs in the metadata of the first file. The first storage device and the second storage device correspondingly change the locally stored metadata of the target file system based on the first notification. This implements synchronization of the metadata of the target file system in the plurality of devices.

Optionally, the first notification indicates which changes occur in the metadata of the first file. For example, the first notification may include content of the first change, for example, the identifier of the first file and an attribute (or a value of an attribute) that is of the file and that is changed through a second change. In this case, the first storage device and the second storage device may obtain, based on the metadata that is of the first file and that exists before the first change and the content of the first change, the metadata that is of the first file and that is obtained through the first change, and execute the migration task based on the metadata that is of the first file and that is obtained through the first change. For another example, the first notification may include the metadata that is of the first file and that is obtained through the first change. In this case, the first storage device and the second storage device may execute the migration task based on the metadata that is of the first file and that is obtained through the first change.

Alternatively, optionally, the first notification indicates that the first change occurs, but the first notification does not include specific content of the first change and/or the metadata that is of the first file and that is obtained through the first change. In this case, the first storage device and the second storage device request, from the migration scheduling apparatus, the specific content of the first change and/or the metadata that is of the first file and that is obtained through the first change, and correspondingly change the locally stored metadata of the target file system based on information provided by the migration scheduling apparatus.

Implementation 2: The metadata of the target file system is stored in a specified device, and the specified device provides access to and update of the metadata of the target file system. When a device performs a change on the metadata of the target file system, the change is provided for the specified device. The plurality of devices may obtain changed metadata of the target file system from the specified device. This implements synchronization of the metadata of the target file system in the plurality of devices. It should be understood that the plurality of devices herein include the first storage device and the second storage device, and optionally include the migration scheduling apparatus.

A manner of triggering the plurality of devices to obtain the metadata of the target file includes but is not limited to the following: The plurality of devices actively (periodically or aperiodically) read the metadata from the specified device, the specified device notifies (for example, notifies the plurality of devices by using a message queue) the plurality of devices to read the metadata, the specified device actively publishes the change, the device that changes the metadata of the target file system notifies the plurality of devices to read the metadata from the specified device, or the device that changes the metadata of the target file system notifies, a plurality of devices, that are related to the change, to read the metadata.

For example, when the metadata of the first file is changed, a device that manages the metadata of the target file system may provide changed metadata of the first file for the first storage device and the second storage device. In this way, the first storage device and the second storage device know a change of the ownership information of the first file, and trigger the first storage device and the second storage device to execute the migration task.

For example, the source device may periodically read the metadata of the target file system, to know the change of the ownership information of the first file, so as to trigger a push operation on the data of the first file. For example, the destination device may read the metadata of the file system in response to a data scheduling notification, know the change of the ownership information of the first file, and trigger a pull operation on the data of the first file.

In an example of synchronizing metadata of the target file system, the migration scheduling apparatus performs the first change on the metadata of the target file system. The first change is provided for the specified device, and the specified device updates the metadata of the target file based on the first change. The first storage device and the second storage device may read, from the designated device, the metadata that is of the target file system that is obtained through the first change.

Optionally, the specified device may be a global metadata service, or may be the first storage device, the second storage device, the migration scheduling apparatus, or the like.

In a possible solution, the metadata of the target file system is stored in the global metadata service. The global metadata service is used to manage the metadata of the file system. In this way, the plurality of devices read or write the metadata in a format of metadata in the global metadata service. This unifies a manner of representing the metadata of the file, and shields differences in metadata management and access control between heterogeneous storage devices, thereby not only improving convenience in data use and management for the user but also improving system scalability and flexibility.

It should be understood that, after the metadata of the target file system is synchronized between the plurality of devices in the foregoing manners, the any one of the plurality of devices may dynamically obtain the changed metadata of the target system (that is, may obtain current metadata of the target system).

Further, the global metadata service may provide a service interface. The device may invoke the service interface to access and update the metadata. The service interface is a communication interface, for example, an application programming interface (application programming interface, API), and can be configured to exchange data between different functional modules and provide a service. The abstract service interface can be configured to decouple an invoker from an implementer. For example, a device that invokes the service interface can provide related data based on a requirement of the service interface, and the global metadata service can obtain the related data and implement a corresponding function through the service interface. This not only improves metadata access and update efficiency, but also improves system scalability and flexibility.

In a possible implementation, the migration scheduling apparatus invokes the service interface provided by the global metadata service, to perform the first change on the metadata of the first file. Optionally, the service interface may be provided by the global metadata service for the migration scheduling apparatus. In this case, the migration scheduling apparatus may directly invoke the service interface. Alternatively, optionally, the service interface may be provided by the global metadata service for a device that shares metadata stream of the target file system. In this case, the migration scheduling apparatus may invoke a service interface on any device that shares the metadata stream of the target file system. For example, the global data service provides the service interface for the first storage device. The migration scheduling apparatus may invoke the service interface on the first storage device to implement the first change.

In a possible implementation, the ownership information of the file may be included in the metadata of the file as a basic attribute of the file. In this case, the migration scheduling apparatus may change ownership metadata of the file by executing a user-defined instruction or a preset instruction for modifying the attribute.

In another possible implementation, the ownership information of the file may be included in an extended attribute field in the metadata of the file as an extended attribute of the file, for example, an xattr field or a tags field. In this case, the migration scheduling apparatus may change the extended attribute field in the metadata of the file by executing a customized instruction. Alternatively, for example, the ownership information of the file is included in an xattr field, the migration scheduling apparatus may change the ownership information of the file by using a preset instruction for modifying xattr.

As mentioned above, the migration scheduling apparatus may send the notification (referred to as the first notification below for ease of differentiation), to indicate that the metadata of the first file undergoes the first change. Optionally, a receiver of the first notification may be a device that manages the metadata of the target file system, may be all devices that share the metadata of the target file system, or may be a device (the first storage device and/or the second storage device) related to the migration task.

In an example of sending the first notification, the migration scheduling apparatus may send the first notification to the global metadata service. The global metadata service publishes the first change. For example, the global metadata service may notify the source device (for example, the first storage device) and the destination device (for example, the second storage device) to read the metadata that is of the first file and that is obtained through the first change, or send, to the source device and the destination device, the metadata that is of the first file and that is obtained through the first change. Correspondingly, in this example, the source device and the destination device may receive the notification from the global metadata service, or receive the metadata that is of the first file and that is obtained through the first change and sent by the global metadata service.

In another example of sending the first notification, the migration scheduling apparatus may notify the source device (for example, the first storage device) and the destination device (for example, the second storage device) to read the metadata that is of the first file and that is obtained through the first change, or send, to the source device and the destination device, the metadata that is of the first file and that is obtained through the first change. Correspondingly, in this example, the source device and the destination device may receive the notification from the migration scheduling apparatus, or receive the metadata that is of the first file and that is obtained through the first change and sent by the migration scheduling apparatus.

It should be understood that a method for sending the notification by the migration scheduling apparatus may be a direct sending manner or an indirect sending manner. In the direct sending manner, a sender sends a message to the receiver. Certainly, the message may be copied in a plurality of copies, respectively sent to a plurality of receivers. The indirect sending manner may be implemented in a plurality of possible manners, for example, implemented by using a message queue or implemented through forwarding by an intermediate device. For example, indirect sending of the message is implemented by using the message queue. A message in the message queue may be read by one or more devices. The sender writes the message into the message queue, and the receiver (there may be one or more receivers) may read the message from the message queue, to implement receiving and sending the message.

Optionally, the embodiment shown in FIG. 8 includes step S803. Details are as follows.

Step S803: The first storage device obtains the metadata of the first file.

The metadata of the first file includes the ownership information of the first file and storage layout information of the first file. The ownership information of the first file indicates the home device of the first file. The storage layout information of the first file indicates a device storing the first file. Further, when the data of the first file is stored in a form of a plurality of data segments, the storage layout information further indicates a device store the data segments of the first file.

Optionally, the ownership information includes an identifier of a home device of the file. For example, the ownership information of the first file is an identifier of the first storage device, that is, it indicates that the home device of the file is the first device.

Optionally, the storage layout information includes an identifier of the data of the stored file. For example, if the storage layout information of the first file includes the identifier of the first storage device, it indicates that the data of the file is stored in the first storage device.

Alternatively, optionally, the ownership information of the file and/or the storage layout information of the file may also be embodied in a manner of a value of a field. For example, the storage layout information includes a plurality of fields. The plurality of fields respectively correspond to a plurality of storage devices. When a value of a field corresponding to a storage device is a first value, it indicates that the storage device stores the data of the first file. For example, in "device S1: 1; device S2: 0", if a value of the field "device S1" is 1, it indicates that the data of the first file is stored in the device S1, and if a value of the field "device S2" is 0, it indicates that the data of the first file is not stored in the device S2.

In some scenarios, the data of the file may be stored in the plurality of storage devices in the form of the data segments. The storage layout information further indicates the data segments stored in the plurality of storage devices. For example, the storage layout information may include a bitmap (bitmap) of the file, to indicate a storage layout on the plurality of devices. When data of a file includes eight data segments, a data segment stored in a storage device may be indicated by using an 8-bit bitmap. For example, the storage layout information may include "device S1: 0x1010 0000; device S3: 0x1111 1111". In a value of the field "device S1", if a 1^{st} bit is 1, it indicates that a 1^{st} data segment is stored in the storage device S1, if a 2^{nd} bit is 0, it indicates that a 2^{nd} data segment is not stored in the storage device S1, and another bit is deduced by analogy. Similarly, in a value of the field "device S3", if a 1^{st} bit is 1, it indicates that a 1^{st} data segment is stored in the storage device S3, if a 2^{nd} bit is 1, it indicates that a 2^{nd} data segment is stored in the storage device S3, and another bit is deduced by analogy.

It should be noted that the metadata obtained by the first storage device may be the metadata that is of the first file and that is obtained through the first change. The first change may be performed by the migration scheduling apparatus, or may be performed by another device, for example, the first storage device, the second storage device, or another storage device.

Optionally, the embodiment shown in FIG. 8 includes step S804. Details are as follows.

Step S804: The second storage device obtains the metadata of the first file.

For related descriptions, refer to S803.

Optionally, the embodiment shown in FIG. 8 further includes step S805. Details are as follows.

Step S805: The second storage device sends a pull request.

Optionally, the pull request may be sent by the second storage device to the first storage device, to indicate the first storage device to push the data of the first file. Optionally, the pull request may carry the ownership information of the first file and the storage layout information of the first file.

Alternatively, optionally, the pull request may be sent to the plurality of devices in a broadcast or multicast manner, to indicate a device storing the data of the first file to push the data of the first file.

Optionally, the pull request may be directly sent to the receiver, or may be sent in an indirect sending manner, for example, sent by using a message queue. For detailed descriptions, refer to the related descriptions of the manner of sending the first notification.

Step S806: The first storage device migrates the data of the first file from the first storage device to the second storage device.

In a possible implementation, the first storage device migrates the data of the first file from the first storage device to the second storage device when determining that a storage device indicated by the ownership information of the first file is the second storage device and the storage layout information of the first file indicates that the storage device storing the first file does not include the second storage device but includes the first storage device.

In some possible scenarios, when the data of the first file includes the plurality of data segments, that the storage layout information of the first file indicates that the storage device storing the first file does not include the second storage device but includes the first storage device includes the following cases: The first storage layout information indicates that the data segment (some or all of the data segments) of the first file is stored in the first storage device and the second storage device does not store all the data segments of the first file. In other words, when the home device of the first file does not have the complete data of the file, the device storing the data segment of the first file is triggered to push the data segment of the first file to the home device of the first file.

In a possible design, a data segment of the first file pushed by the source device includes a data segment that is not stored in the destination device. Optionally, content of the ownership information of the first file and content of the storage layout information may be determined by the first storage device based on the metadata of the first file, or may be determined by the first storage device based on the pull request.

For example, when the first storage device obtains the metadata of the first file, the ownership information of the first file is the identifier of the second storage device, and the storage layout information of the first file does not include the identifier of the second storage device but includes the identifier of the first storage device, the first storage device migrates the data of the first file from the first storage device to the second storage device.

In another possible implementation, the first storage device migrates the data of the first file from the first storage device to the second storage device in response to the pull request.

Optionally, migrating the data of the first file from the first storage device to the second storage device may include the following several cases.

Case 1: The first storage device pushes the data of the first file to a shared storage area. The shared storage area is connected to the first storage device and the second storage device. The second storage device may obtain the data of the first file from the shared storage area.

When the data of the first file is stored in the form of the plurality of data segments, a data segment obtained by the second storage device from the shared storage area is the data segment that is not stored in the second storage device. Specifically, when pulling a data segment of the first file, the second storage device first checks whether the data segment is stored in the second storage device, and pulls the data segment from the shared storage area when the data segment is not stored in the second storage device.

Further, the first storage device may notify the another device that the data is already pushed to the shared storage area. A notification manner may include the following several implementations.

Implementation 1: The first storage device performs the second change on the metadata of the first file, to trigger the second storage device to obtain the data of the first file from the shared storage area and store the data in the second storage device.

The second change indicates to add the shared storage area to the storage device indicated by the storage layout information of the first file. After the first change, the storage layout information of the first file indicates that the storage device storing the first file includes the first storage device and the shared storage area, and does not include the second storage device. The second storage device obtains metadata that is of the file and that is obtained through the second change, pulls the data of the first file from the shared storage area, and stores the data in the second storage device.

For example, the ownership information of the first file is the identifier of the second storage device. Before the second change, the storage layout information of the first file includes the identifier of the first storage device and does not include the identifier of the second storage device. The first storage device may add an identifier of the shared storage area to the storage layout information of the first file. After the second change, the storage layout information of the first file includes the information about the first storage device and the identifier of the shared storage area, and does not include the identifier of the second storage device.

In this implementation, the metadata that is of the first file and that is obtained through the second change may be obtained by the another device in the following manner: The first storage device performs the first change by synchronizing the metadata of the target file system, and the another device obtains the metadata that is of the first file and that is obtained through the second change by synchronizing the metadata of the target file system. For this process, refer to the two implementations of synchronizing the metadata of the target file system between the plurality of devices in step S802. Details are not described again.

For example, the metadata of the target file system is the streaming structure. The first storage device adds a second metadata record to the end of the metadata stream. The second metadata record includes the identifier of the first file and the storage layout information of the first file. The storage layout information of the first storage includes the identifier of the shared storage area (optionally includes the identifier of a second storage device).

For related descriptions, refer to the related descriptions of the manner in which the migration scheduling apparatus performs the first change and sends the first notification in step S802.

Implementation 2: The first storage device sends a push notification to the second storage device, to notify the another device that the data is already pushed to the shared storage area.

Case 2: The first storage device pushes the data of the first file to the second storage device, and correspondingly, the second storage device pulls the data of the first file from the first storage device.

For example, if the first storage device and the second storage device already establish a connection or determine that the peer devices are trusted devices, the first storage device may directly push the data of the first file to the second storage device without using the intermediate device. This improves data migration efficiency.

For another example, the first storage device may push the data of the first file to the second storage device if the first storage device and the second storage device are devices located in a same data center.

In some possible scenarios, when the data of the first file is stored in the form of the plurality of data segments, a data segment pulled by the second storage device from the first storage device is the data segment that is not stored in the second storage device.

It should be understood that the foregoing two cases are merely examples, and there may be another design in a specific implementation process.

In a possible implementation, when the data of the file is stored in the form of the plurality of data segments, the data may alternatively be pushed in a data segment manner.

Optionally, after storing the data of the first file, the second storage device performs a third change on the metadata of the first file. The third change indicates to add the second storage device to the storage device indicated by the storage layout information of the first file. Optionally, when the data of the file is stored in the form of the plurality of data segments and the storage layout information includes the bitmap of the file, after the second storage device pulls a data segment, the second storage device may change a bitmap of the file corresponding to the second storage device, to indicate that the data segment is already stored in the second storage device.

Alternatively, after storing the data of the first file, the second storage device sends a notification. The notification indicates that the second storage device already obtains the data of the first file. The notification may be sent to the second storage device and/or the migration scheduling apparatus, or may be sent through broadcast.

In some possible scenarios, when the second storage device already stores the data of the first file, the first storage device may locally delete the data of the first file.

For example, the first storage device deletes data of the first file from the first storage device when the ownership information of the first file is the second storage device and the storage layout information of the first file includes the identifier of the first storage device and the identifier of the second storage device.

For example, when the first file receives the notification, and the notification indicates that the second storage device already obtains the data of the first file, the first storage device deletes the data of the first file from the first storage device, to prevent the plurality of storage devices from repeatedly storing data of a file, so as to release storage space, and optimize overall storage costs.

In a possible solution, when the data of the file is stored in the form of the plurality of data segments, the first storage device locally deletes the data segments of the first file after all the data segments of the first file are stored in the second storage device. This can avoid a problem that the data of the file is damaged due to an error in a data migration process and the data of the file is no longer complete.

Further, the first storage device may perform a fourth change operation on the metadata of the first file. The fourth change operation indicates to delete the identifier of the first storage device from the storage layout information of the first file.

In a possible implementation, before deleting the data of the first file, the first storage device may first mark the data of the first file as deletable, to perform a delete operation when the data of the first file is in a deletable state. For example, when the data of the first file is being used, it is inconvenient to immediately perform the deletion operation. In this case, the data of the first file may be marked first, and is deleted after the file is used.

For another example, before the file is deleted, the file is first marked as deletable. The deletable file cannot be accessed in a normal manner. The file is uniformly deleted when a preset condition is met. The preset condition herein may be that the data marked as deletable reaches preset duration, the data marked as deletable reaches a preset size, or the like. In this way, the user can conveniently retrieve the data of the first file from the first storage device, to reduce a data loss caused by a misoperation, and improve user experience.

In some possible scenarios, the migration scheduling apparatus may determine execution progress of the task based on the ownership information and the storage layout information of the file. Specifically, the metadata of the file may be changed in the process of triggering migration, in the process of migrating the data, and in the process of deleting the local data. The change (especially the change of the ownership information of the file and a change of the storage layout information of the file) of the metadata of the file is monitored, to determine the execution progress of the task. This helps the user know an execution status of the task. In addition, a task that is slow in progress or fails to be executed or the like is handled as quickly as possible, to improve system stability.

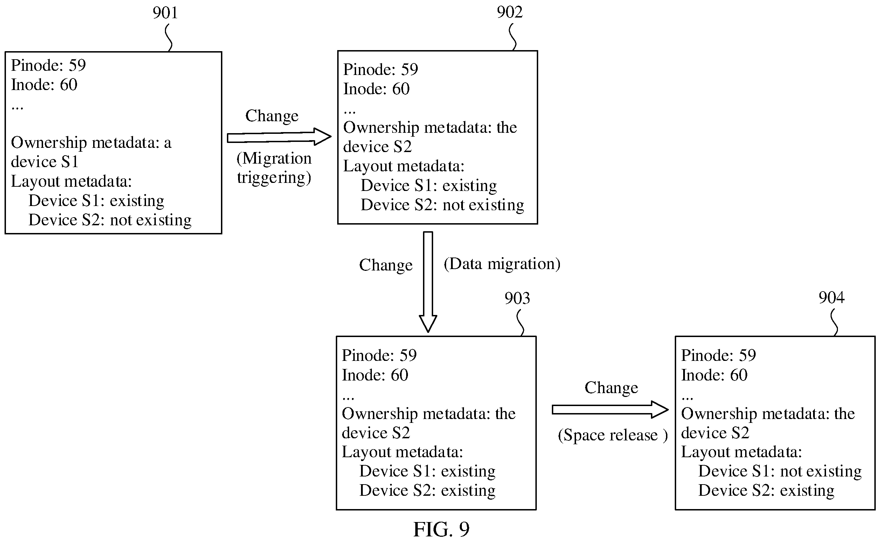

FIG. 9 is a diagram of the change of the metadata of the first file according to an embodiment of this application. For example, the change of the metadata may include the following several phases.

Phase 1: Metadata existing before migration is triggered. Metadata 901 is metadata of the first file existing before data migration is triggered, and includes an identifier (an inode is 60) of the first file, the ownership information (namely, ownership metadata) of the first file, and the storage layout information (namely, layout metadata) of the first file. It can be learned that the home device of the first file is the device S1, and the data of the first file exists in the device S1. Optionally, the metadata 901 further includes an inode (denoted as a pinode) of a parent node of the first file.

Phase (2): metadata obtained after migration is triggered and before data is migrated. The metadata 901 may be changed, and changed metadata of the first file is metadata 902. It can be learned that the home device of the first file is changed to the device S2. Because the metadata of the first file does not exist in the device S2, migration from the device S1 to the device S2 is triggered.

Phase (3): metadata obtained after data is migrated and before the space is released. After the data of the first file is migrated from the device S1 to the device S2, the layout metadata of the first file needs to be correspondingly updated. It can be learned from metadata 903 that the data of the first file already exists in the device S2.

Phase (4): metadata obtained after the storage space is released. To release the storage space, the data of the first file stored in the device S1 may be deleted. After the data of the first file stored in the device S1 is deleted, the storage layout information of the first file also needs to be correspondingly updated. It can be seen from metadata 904 that the layout metadata of the file indicates that the metadata of the first file does not exist on the device S1.

Certainly, the metadata in the four phases shown in FIG. 9 is a possible case enumerated for ease of understanding the change of the metadata, and is not used as a limitation on a change phase and a metadata format of the metadata. In a specific implementation process, migration of the data may include more or fewer metadata change phases, or the ownership metadata and the layout metadata in the metadata may have other designs.

In some scenarios, the first storage device and/or the second storage device may generate a local file view. A local file is a file that belongs to a current device and/or whose storage layout information indicates the current device.

For example, the second storage device provides a local file view of the second storage device. The local file view indicates a hierarchy of a plurality of files stored in the second storage device. Storage layout information of the plurality of files indicates the second storage device, and/or ownership information of the plurality of files indicates the second storage device. As shown in FIG. 4, the storage device S1 may provide a local file view.

In the embodiment shown in FIG. 8, migration of the data of the file is triggered by changing the metadata of the file. When the file belongs to the second storage device but the data of the file is still stored in the first storage device, the first file is migrated from the first storage device to the second storage device. The migration scheduling apparatus, the source device, and the destination device can trigger migration for the file based on the change (for example, a change for metadata like ownership and a storage layout of the file) of the metadata of the file. In addition, migration progress of the file can also be reflected by using a status of the metadata of the file. According to this method, data migration efficiency can be improved, convenience in data use and management can be improved, and the devices are decoupled in the migration process, to greatly improve flexibility and scalability of the service system.

In addition, when the method is used for migration, a storage location of the data of the file is still indicated by storage layout information. Therefore, the foregoing data migration method may not affect normal use of the data of the file by the user, to improve stability of the service system.

The method embodiment shown in FIG. 8 includes many possible implementation solutions. The following describes some of the implementation solutions by using examples. It should be noted that, for a related concept, operation, or logical relationship that is not explained in the following, refer to corresponding descriptions in the embodiment shown in FIG. 8.

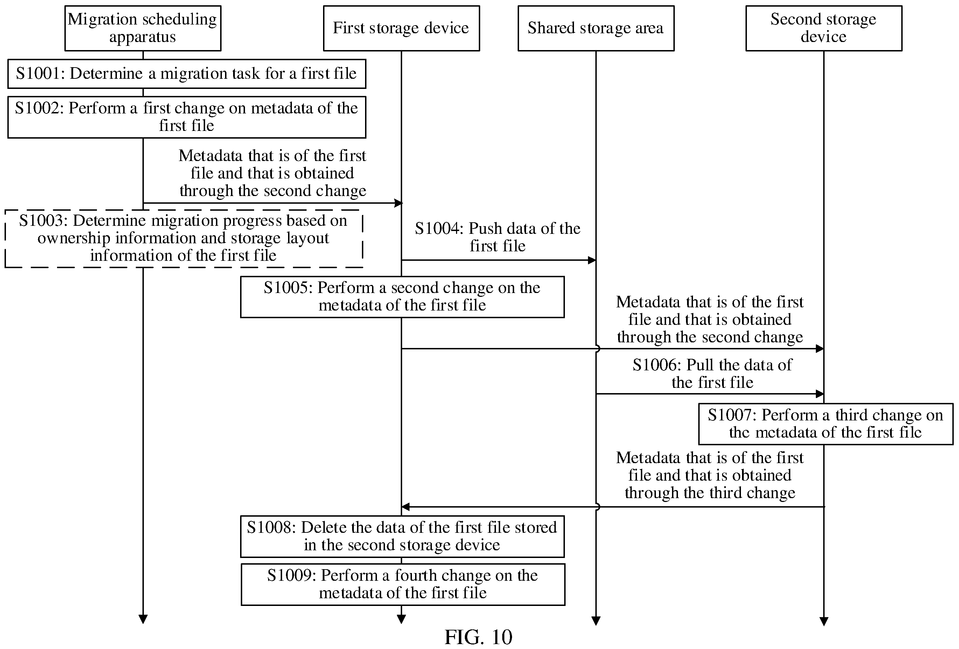

FIG. 10 is a schematic flowchart of another data migration method according to an embodiment of this application. Optionally, the method may be applied to the foregoing data migration system, for example, the data migration system shown in FIG. 1, FIG. 3, or FIG. 5.

The data migration method shown in FIG. 10 may include one or more of step S1001 to step S1008. It should be understood that, for ease of description in this application, a sequence of S1001 to S1008 is used for description, but this is not intended to limit execution that is necessary in the foregoing sequence. An execution sequence, an execution time point, a quantity of execution times, and the like of the foregoing one or more steps are not limited in embodiments of this application. Step S1001 to step S1008 are specifically as follows.

Step S1001: A migration scheduling apparatus determines a migration task for a first file.

For related descriptions, refer to the descriptions of step S801.

Step S1002: The migration scheduling apparatus performs a first change on metadata of the first file.

The first change indicates to change, from a first storage device to a second storage device, a storage device to which the first file belongs.

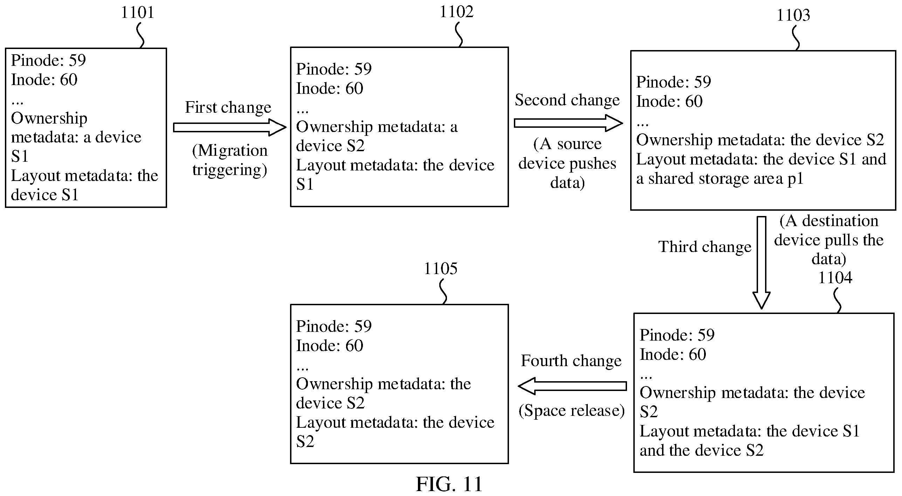

For example, the first change instruction indicates to change ownership information of the first file from an identifier of the first storage device to an identifier of the second storage device. FIG. 11 is a diagram of a change of the metadata of the first file according to an embodiment of this application. Metadata 1101 of the first file undergoes the first change, to obtain metadata 1102. In the metadata 1102, the ownership information of the first file includes the identifier of the second storage device.

The first storage device may obtain the change of the ownership information of the file. For example, the first storage device may obtain metadata that is of the first file and that is obtained through the first change. For example, the migration scheduling apparatus appends the metadata 1102 to a metadata stream. Correspondingly, the first storage device may obtain a record appended to the metadata stream.

Optionally, the data migration method shown in FIG. 10 further includes step S1003. Details are as follows.

Step S1003: The migration scheduling apparatus determines migration progress based on ownership information and storage layout information of the first file.

For example, the migration progress is "not started" when a storage device indicated by the ownership information of the first file is the second storage device but the storage layout information of the first file indicates that a storage device storing the first file does not include the second storage device and includes the first storage device.

The migration progress is, when the storage device indicated by the ownership information of the first file is the second storage device but the storage layout information of the first file indicates that the storage device storing the first file includes the first storage device and a shared storage area but does not include the second storage device, that the source device already pushes data.

The migration progress is, when the storage device indicated by the ownership information of the first file is the second storage device but the storage layout information of the first file indicates that the storage device storing the first file includes the first storage device and the second storage device, that the destination device already pulls the data.

The migration progress is "completed" when the storage device indicated by the ownership information of the first file is the second storage device, but the storage layout information of the first file indicates that the storage device storing the first file includes the second storage device but does not indicate the first storage device.

FIG. 11 is a diagram of a change of the metadata of the first file according to an embodiment of this application. Metadata 1101 is metadata of the first file existing before migration is triggered. Metadata 1102 is metadata of the first file obtained after migration is triggered. Metadata 1103 is metadata obtained after a source device pushes the data of the first file. Metadata 1104 is metadata obtained after a destination device pulls the data of the first file. The metadata 1105 is metadata obtained after the source device deletes the local data of the first file.

Step S 1004: The first storage device pushes the data of the first file to the shared storage area.

The shared storage area is an intermediate device that provides storage space. The shared storage area is connected to the first storage device, and the first storage device may push the data to the shared storage area. Further, the shared storage area may also be connected to the second storage device, and the second storage device pulls the data from the shared storage area.

Optionally, the shared storage area may be provided by a global data service. Alternatively, optionally, the shared storage area is provided by a third-party temporary storage device or an intermediate device.

In a possible implementation, an ownership change of the first file is synchronized to a device (namely, the first storage device) in which the data of the first file is located. The first storage device detects that ownership of the first file is not the current device, and layout metadata shows that the data is locally but not in a home device (namely, the second storage device). In this case, the source device pushes (or publishes) the data of the first file to the shared storage area.

Optionally, after the source device pushes the data to the shared storage area, the source device may first not delete the local data of the first file, to reduce a risk of a data loss of the first file caused by a failure in performing a subsequent step, so as to improve system stability.

In a possible manner, the data of the first file may already be stored in the shared storage area. Therefore, to avoid repeated push of the data, the first storage device pushes (or publishes) the data of the first file to the shared storage area when the first storage device detects that the ownership of the first file is not the current device and the layout metadata shows that the data is locally but not in the home device (namely, the second storage device) and the shared storage area.

Step S1005: The first storage device performs a second change on the metadata of the first file.

The first change indicates to add the shared storage area to the storage device indicated by the storage layout information of the first file. After the second change, the storage layout information of the first file indicates that a storage device storing the first file includes the first storage device and the shared storage area, and does not include the second storage device.

For example, the first storage device adds an identifier of the shared storage area to the storage layout information of the first file. As shown in FIG. 11, the metadata 1104 obtained through the second change includes the identifier of the shared storage area (namely, a shared storage area p1).

Optionally, the second storage device may obtain metadata that is of the first file and that is obtained through the second change.

Step S1006: The second storage device pulls the data of the first file from the shared storage area.

Step S 1007: The second storage device performs a third change on the metadata of the first file.

The third change indicates to add the second storage device to the storage device indicated by the storage layout information of the first file. For example, the second storage device adds the identifier of the second storage device to the storage layout information of the first file. For example, as shown in FIG. 11, the metadata 1103 obtained through the third change includes an identifier (namely, S2) of a device S2.

Optionally, after the second storage device pulls the data of the first file, the data of the first file in the shared storage area may be deleted from the shared storage area. Therefore, the third change may further indicate to delete the shared storage area from the storage device indicated by the storage layout information of the first file. For example, the second storage device may delete the identifier of the shared storage area from the storage layout information of the first file.

Alternatively, optionally, a device that provides the shared storage area may change the metadata of the first file, to delete the shared storage area from the storage device indicated by the storage layout information of the first file.

Metadata that is of the first file and that is obtained through the third change may be synchronized to the first storage device and/or the migration scheduling apparatus. For example, synchronization is performed by using metadata of a target file, or the second storage device sends, to the first storage device, the metadata that is of the first file and that is obtained through the third change. For related descriptions, refer to the manners of synchronizing the first change and the second change in step S802 and step S806.

Step S1008: The first storage device deletes the data of the first file stored in the second storage device.

Specifically, when the data of the first file already exists in the home device of the first file, the first storage device may delete the local data of the first file, to release storage space, and reduce storage costs.

In a possible solution, when the ownership information of the first file is the second storage device and the storage layout information of the first file includes the identifier of the first storage device, the first storage device deletes the data of the first file from the first storage device.

Optionally, the first storage device may synchronize the metadata that is of the first file and that is obtained through the third change, to determine that the ownership information of the first file is the second storage device and the storage layout information of the first file includes the identifier of the first storage device.

Step S1009: The first storage device performs a fourth change on the metadata of the first file.

The first storage device is deleted from the storage device indicated by the storage layout information of the first file.

For example, the first storage device deletes the identifier of the first storage device from the storage layout information of the first file. As shown in FIG. 11, the metadata 1105 obtained through the fourth change does not include an identifier of a device S1.

In the embodiment shown in FIG. 10, the migration scheduling apparatus, the source device, and a destination device can implement data migration by changing the metadata of the file, and the data migration progress can also be reflected by using the metadata of the file. Additional data access security control does not need to be established between the migration scheduling apparatus, the first storage device, and the second storage device for data migration. This simplifies a data migration process. The first storage device and the second storage device update the ownership information and the storage layout information of the file, to indicate, to each other, operations completed by the first storage device and the second storage device. This can improve data migration efficiency, and improve convenience in data use and management. In conclusion, in embodiments of this application, not only data migration efficiency can be improved, but also devices are decoupled in the migration process, to greatly improve flexibility and scalability of a service system.

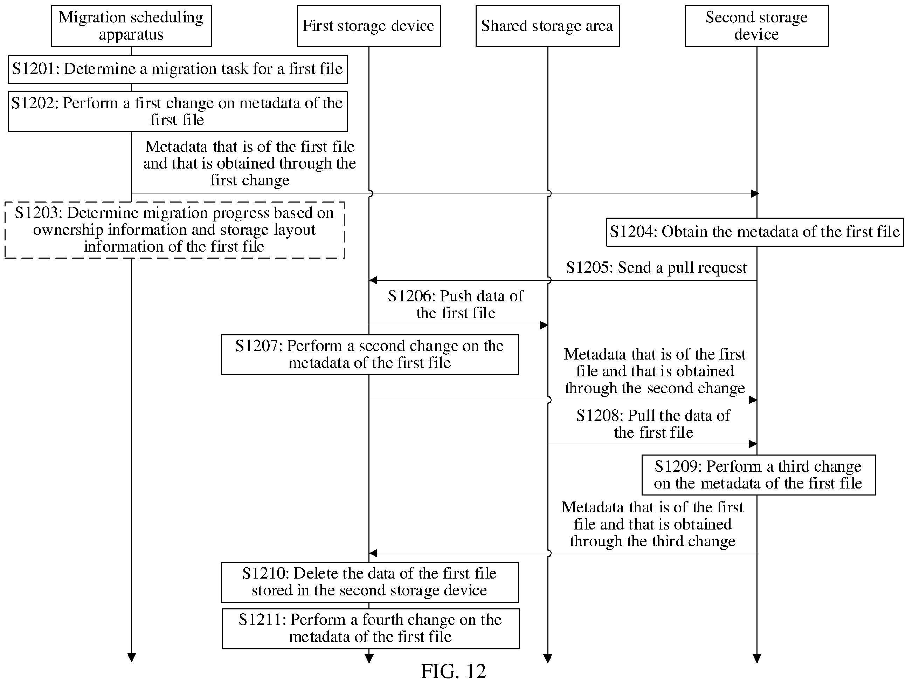

FIG. 12 is a schematic flowchart of still another data migration method according to an embodiment of this application. Optionally, the method may be applied to the foregoing data migration system, for example, the data migration system shown in FIG. 1, FIG. 3, or FIG. 5.

The data migration method shown in FIG. 12 may include one or more of step S1201 to step S1208. It should be understood that, for ease of description in this application, a sequence of S1001 to S1008 is used for description, but this is not intended to limit execution that is necessary in the foregoing sequence. An execution sequence, an execution time point, a quantity of execution times, and the like of the foregoing one or more steps are not limited in embodiments of this application. Step S1001 to step S1008 are specifically as follows.

Step S1201: A migration scheduling apparatus determines a migration task for a first file.

For related descriptions, refer to the descriptions of step S801.

Step S1202: The migration scheduling apparatus performs a first change on metadata of the first file.

For related descriptions, refer to the descriptions of step S802.

Optionally, the data migration method shown in FIG. 12 further includes step S1203. Details are as follows.

Step S1203: The migration scheduling apparatus determines migration progress based on ownership information and storage layout information of the first file.

Step S1204: A second storage device obtains the metadata of the first file.

The metadata of the first file obtained by a first storage device is metadata obtained through the first change.

Step S1205: The second storage device sends a pull request.

Specifically, ownership change of the first file is synchronized to a home device (namely, the second storage device) of the first file. If the second storage device detects that the ownership of the first file is the current device and layout metadata shows that data is not locally, the second storage device sends the pull request. In this way, a device storing the data of the first file pushes the data of the first file.

Optionally, the pull request includes an identifier of the second storage device and an identifier of the first file. Optionally, the pull request further includes the ownership information of the first file and/or the storage layout information of the first file.

Optionally, the pull request may be sent in a direct sending manner or an indirect sending manner.

For example, the second storage device writes the pull request into a broadcast message queue, and another device (for example, the first storage device) may receive the pull request by reading the broadcast message queue.

Optionally, the storage layout information of the first file includes information about the first storage device. Therefore, the second storage device may send the pull request to the second storage device, so that the first storage device pushes the data of the first file.

In a possible manner, the data of the first file may already be stored in a shared storage area. Therefore, to avoid repeated push of the data, the second storage device sends the pull request when the second storage device detects that the ownership of the first file is not the current device and the layout metadata shows that the data is not locally or in the shared storage area.

Step S1206: The first storage device pushes the data of the first file to the shared storage area.

Specifically, the first storage device receives the pull request. In response to the pull request, the first storage device pushes the data of the first file to the shared storage area.

In a possible implementation, the pull request includes the ownership information of the first file and the storage layout information of the first file. The first storage device pushes (or publishes), if the first storage device determines, based on the pull request, that the ownership of the first file is not the current device, and the layout metadata shows that the data is locally but not in the home device (namely, the second storage device), the data of the first file to the shared storage area.

Step S1207: The first storage device performs a second change on the metadata of the first file.

For related descriptions, refer to step S1005.

Step S1208: The second storage device pulls the data of the first file from the shared storage area.

Step S1209: The second storage device performs a third change on the metadata of the first file.

For related descriptions, refer to step S1007.

Step S1210: The first storage device deletes the data of the first file stored in the second storage device.

For related descriptions, refer to step S1008.

Step S1211: The first storage device performs a fourth change on the metadata of the first file.

For related descriptions, refer to step S1009.

In the embodiment shown in FIG. 12, the destination device for data migration actively sends the pull request. This can resolve a data migration failure caused because the destination device is offline or the destination device has a failure, thereby improving a success rate of data migration.

The foregoing describes the methods in embodiments of this application, and the following provides an apparatus in embodiments of this application.

It may be understood that, to implement functions in the foregoing method embodiments, a plurality of apparatuses provided in embodiments of this application, for example, a data migration apparatus and a migration scheduling apparatus, include a corresponding hardware structure, software unit, or a combination of a hardware structure and a software structure for performing each function. Persons skilled in the art should be easily aware that, in combination with a plurality of functions described in embodiments disclosed in this specification, the apparatus and modules in the apparatus may be implemented by hardware or a combination of hardware and computer software. Whether a function is performed by hardware or hardware driven by computer software depends on particular applications and design constraints of the technical solutions. Persons skilled in the art may implement the foregoing method embodiments by using different apparatus implementations in different use scenarios. It should not be considered that different implementations of the apparatus go beyond the scope of embodiments of this application.

The following enumerates several possible apparatuses.

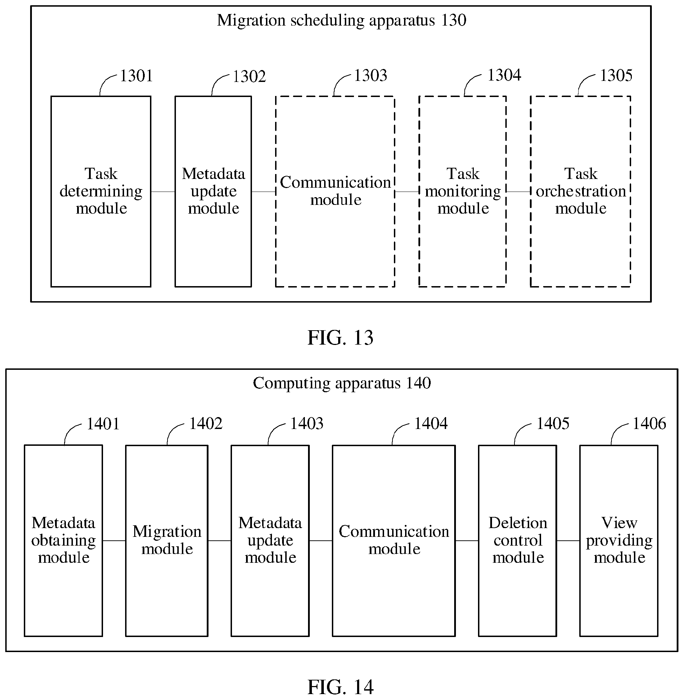

FIG. 13 is a diagram of a structure of a migration scheduling apparatus 130 according to an embodiment of this application. The migration scheduling apparatus 130 may include a task determining module 1301 and a metadata update module 1302. The migration scheduling apparatus 130 is configured to implement the foregoing data migration method, for example, the data migration method in the embodiment shown in FIG. 8, FIG. 10, or FIG. 12.

In a possible implementation, the task determining module 1301 is configured to determine a migration task for a first file. Data of the first file is stored in a first storage device. The migration task for the first file indicates to migrate the data of the first file from the first storage device to a second storage device.

The metadata update module 1302 is configured to perform a first change on metadata of the first file, to trigger execution of the migration task for the first file. The first change indicates to change, from the first storage device to the second storage device, a storage device to which the first file belongs.

In another possible implementation, the metadata of the first file includes ownership information of the first file and storage layout information of the first file. Before the first change is performed, a storage device indicated by the ownership information of the first file is the first storage device, and the storage layout information of the first file indicates that a storage device storing the first file includes the first storage device and does not include the second storage device.

Optionally, the ownership information of the first file is an identifier of the first storage device. The storage layout information of the first file includes the identifier of the first storage device and does not include an identifier of the second storage device.

In still another possible implementation, the metadata update module 1302 is configured to change the ownership information of the first file from the identifier of the first storage device to the identifier of the second storage device.

In still another possible implementation, the migration task for the first file includes an identifier of the first file, the identifier of the first storage device, and the identifier of the second storage device.

In still another possible implementation, the first file belongs to a target file system. The metadata of the first file is included in metadata of the target file system. The metadata of the target file system is synchronized between a plurality of devices. The plurality of devices includes a first computing device and a second computing device. The first computing device is located in the first storage device or is connected to the first storage device. The second computing device is located in the second storage device or is connected to the second storage device. Further, the plurality of devices may further include the migration scheduling apparatus.

In still another possible implementation, the migration scheduling apparatus 130 further includes a communication module 1303. The communication module 1303 is configured to send a first notification. The first notification indicates that the metadata of the first file is changed, so that the first computing device or the second computing device obtains, based on the first notification, metadata that is of the first file and that is obtained through the first change, and executes the migration task for the first file based on the metadata that is of the first file and that is obtained through the first change.

Optionally, the first notification indicates which changes occur in the metadata of the first file. For example, the first notification may include content of the first change, and/or the first notification may include the metadata that is of the first file and that is obtained through the first change. Alternatively, optionally, the first notification indicates that the first change occurs, but does not include specific content of the change and the metadata that is of the first file and that is obtained through the first change.

In still another possible implementation, the migration scheduling apparatus further includes a task monitoring module 1304. The task monitoring module 1304 is configured to:
obtain metadata that is of the first file and that is obtained through a second change, where the second change is performed by the first computing device or the second computing device, and the second change indicates a change of the storage layout information of the first file; and
determine migration progress of the first file based on the metadata that is of the first file and that is obtained through the second change.

In still another possible implementation, the metadata of the target file system is locally stored in the plurality of devices.

In still another possible implementation, the metadata of the target file system is stored in a global metadata service. The global metadata service can store the metadata of the target file system. Further, the global metadata service can support access to and update of the metadata of the target file system.

In still another possible implementation, the migration scheduling apparatus 130 further includes a communication module 1303. The communication module 1303 is configured to:
receive a second notification, where the second notification indicates that the metadata of the first file is changed.

In still another possible implementation, the task monitoring module 1304 is further configured to:
obtain, based on the second notification, the metadata that is of the first file and that is obtained through the second change, where optionally, the second notification includes content of the second change, or the second notification includes the metadata that is of the first file and that is obtained through the second change.

In still another possible implementation, a notification (for example, the first notification or the second notification) may be sent in a form of a message queue. A sender writes a message into the message queue, and a receiver reads the message queue to receive the notification. This further reduces a coupling degree between different functional modules.

In still another possible implementation, the communication module 1303 is further configured to send, to the first computing device or the second computing device, a request used to obtain changed metadata of the first file.

The task monitoring module 1304 is further configured to obtain, based on a response of the first computing device or the second computing device to the request, the metadata that is of the first file and that is obtained through the second change.

In still another possible implementation, the task monitoring module 1304 is further configured to obtain, from the global metadata service, the metadata that is of the first file and that is obtained through the second change.

In still another possible implementation, the global metadata service provides a service interface. The migration scheduling apparatus may invoke the service interface to access and update the metadata.

The service interface is a communication interface, for example, an application programming interface (application programming interface, API), and can be configured to exchange data between different functional modules and provide a service.

In still another possible implementation, the metadata update module 1302 is further configured to:
implement the first change through the service interface provided by the global metadata service.

In still another possible implementation, the global metadata service is located in any one of the plurality of devices, or is located in any device other than the plurality of devices.

For example, the global metadata service is located in a third computing device. The third computing device may be a computing device that is the same as the first computing device or the second computing device, or may be another computing device other than the first computing device and the second computing device.

Optionally, the service interface of the global metadata service may be provided by the third computing device for the migration scheduling apparatus. Alternatively, the third computing device may provide another interface (referred to as a first interface for ease of differentiation) for the migration scheduling apparatus. A function of invoking the service interface of the global metadata service may be implemented by invoking the first interface.

In still another possible implementation, the metadata of the target file system is a tabular structure, and the metadata may be modified. The tabular structure is a data interface including a row and a column. Each row (or each column) includes a plurality of values, and each value corresponds to one field.

Metadata may be added to or deleted from the metadata of the tabular structure, or existing metadata may also be modified. In other words, the first change may alternatively be implemented by modifying the metadata of the target file system.

In still another possible implementation, the metadata of the target file system is a streaming structure and includes a plurality of metadata records. Each metadata record includes an identifier of one node and an attribute of the node. The node is a file or a directory. The attribute of the node includes ownership information of the node and storage layout information of the node.

In still another possible implementation, the metadata update module 1302 is further configured to:
append a first metadata record to an end of the metadata of the target file system, where the first metadata record includes the identifier of the first file and changed ownership information of the first file, and the changed ownership information of the first file indicates that the storage device to which the first file belongs is the second storage device.

In still another possible implementation, the task determining module 1301 is further configured to:
determine the migration task for the first file based on external event information, where
the external event information includes one or more of the following information: a network connection status, a device health status, and a person transfer status related to the first file.

In still another possible implementation, the task determining module 1301 is further configured to:
determine the migration task for the first file based on an analysis result of the metadata of the first file, where the analysis result includes one or more of the following information: a cold or hot state of the first file, security of the first file, and a service related to the first file.

In still another possible implementation, the task determining module 1301 is further configured to:
determine the migration task for the first file according to a migration indication that is input by the user and that is for the first file.

In still another possible implementation, the task determining module 1301 is further configured to determine a migration task for a second file.

The migration scheduling apparatus 130 further includes a task orchestration module 1305. The task orchestration module 1305 is configured to orchestrate an execution sequence of the migration task for the first file and the migration task for the second file.

In a possible design, orchestrating the tasks may include determining an execution sequence, execution priorities, and the like of the tasks.

In still another possible design, a plurality of tasks may be merged in a task orchestration process.

FIG. 14 is a diagram of a structure of a computing apparatus 140 according to an embodiment of this application. The computing apparatus 140 is configured to implement the foregoing data migration method, for example, the data migration method in the embodiment shown in FIG. 8, FIG. 10, or FIG. 12.

Optionally, the computing apparatus 140 is included in the storage device, the computing device, or the like in the foregoing embodiments, for example, included in the first storage device or the second storage device in the embodiment shown in FIG. 1, FIG. 2, FIG. 3, FIG. 8, FIG. 10, or FIG. 12, or for another example, included in the storage device S1, the storage device S2, and/or the storage device S3 in FIG. 4.

Alternatively, the computing apparatus 140 is an independent device, and can be connected to the foregoing storage device or computing device.

In a possible design, the computing apparatus 140 may include a metadata obtaining module 1401 and a migration module 1402. The computing apparatus 140 is configured to implement the method on the side of the first storage device in the embodiment shown in FIG. 8 or FIG. 10.

In a possible implementation, the metadata obtaining module 1401 is configured to obtain metadata of a first file. The metadata of the first file includes ownership information of the first file and storage layout information of the first file.

The migration module 1402 is configured to migrate data of the first file from the first storage device to the second storage device when it is determined that a storage device indicated by the ownership information of the first file is the second storage device and the storage layout information of the first file indicates that a storage device storing the first file does not include the second storage device but includes the first storage device.

In another possible implementation, the first file belongs to a target file system. The metadata of the first file is included in metadata of the target file system. The metadata of the target file system is synchronized between a plurality of devices. The plurality of devices include the computing apparatus or a first computing device in which the computing apparatus is located.

In still another possible implementation, the metadata of the target file system is stored in a global metadata service and is synchronized between the plurality of devices by using the global metadata service;

The metadata obtaining module 1401 is further configured to:
obtain current metadata of the first file from the global metadata service.

In still another possible implementation, the migration module 1402 is further configured to:
push the data of the first file to a shared storage area, where the shared storage area is connected to the first computing device and a second computing device, and the second computing device is located in the second storage device or is connected to the second storage device.

The computing apparatus 140 further includes a metadata update module 1403. The metadata update module 1403 is configured to perform a first change on the metadata of the first file, to trigger the second computing device to obtain the data of the first file from the shared storage area and store the data into the second storage device. The first change indicates to add the shared storage area to a storage device indicated by storage layout information of the first file. After the first change, the storage layout information of the first file indicates that the storage device storing the first file includes the first storage device and the shared storage area and does not include the second storage device.

In still another possible implementation, the ownership information of the first file is an identifier of the second storage device. Before the first change, the storage layout information of the first file includes an identifier of the first storage device and does not include the identifier of the second storage device.

The metadata update module 1403 is further configured to:
add an identifier of the shared storage area to the storage layout information of the first file.

In still another possible implementation, the computing apparatus 140 further includes a communication module 1404. The communication module 1404 is configured to:
receive a first notification, where the first notification indicates that the metadata of the first file is changed.

In still another possible implementation, the computing apparatus 140 further includes a communication module 1404. The communication module 1404 is configured to:
send a second notification, where the first notification indicates that the metadata of the first file is changed.

In still another possible implementation, the metadata obtaining module 1401 is further configured to:
synchronize the metadata of the target file system, where the metadata of the target file system includes the metadata of the first file.

In still another possible implementation, the metadata of the target file system is a streaming structure and includes a plurality of metadata records. Each metadata record includes an identifier of one node and an attribute of the node. The node is a file or a directory. The attribute of the node includes ownership information of the node and storage layout information of the node.

The metadata update module 1403 is further configured to append a first metadata record to an end of the metadata of the target file system. The first metadata record includes an identifier of the first file and the storage layout information of the first file. The storage layout information of the first file indicates that the storage device storing the first file includes the first storage device and the shared storage area.

In still another possible implementation, the computing apparatus 140 further includes a deletion control module 1405. The deletion control module 1405 is configured to:
delete the data of the first file from the first storage device when metadata that is of the first file and that is obtained through a second change is obtained, where the second change indicates a change of the storage layout information of the first file, and after the second change, the storage layout information of the first file indicates that the storage device storing the first file includes the first storage device and includes the second storage device.

The metadata update module 1403 is further configured to perform a third change on the metadata of the first file. The third change indicates to delete the first storage device from the storage device indicated by the storage layout information of the first file. After the third change, the storage layout information of the first file indicates that the storage device storing the first file does not include the first storage device.

In a possible implementation, the deletion control module 1405 is further configured to:
mark the data of the first file as deletable, so that when the data of the first file is in a deletable state, an operation of deleting the first file is performed.

In a possible implementation, the migration module 1402 is further configured to:
push the data of the first file to the second computing device.

In a possible implementation, the computing apparatus 140 further includes a communication module 1404. The communication module 1404 is configured to:
receive a pull request for the first file from the second computing device.

In still another possible implementation, the computing apparatus 140 further includes a view providing module 1406. The view providing module 1406 is configured to provide an ownership file view of the first storage device. The ownership local file view includes information about a plurality of files, and ownership information of the plurality of files indicates the first storage device.

In still another possible implementation, a file belonging to the first storage device and a file belonging to the second storage device belong to a global file system. The computing apparatus 140 further includes a view providing module 1406. The view providing module is configured to provide a global file view. The global file view includes information about a file belonging to the first storage device and information about a file belonging to the second storage device.

In still another possible design, the computing apparatus 140 may include a metadata obtaining module 1401 and a migration module 1402. The computing apparatus 140 is configured to implement the method on the side of the second storage device in the embodiment shown in FIG. 8, FIG. 10, or FIG. 12.

In a possible implementation, the metadata obtaining module 1401 is configured to obtain metadata of a first file. The metadata of the first file includes ownership information of the first file and storage layout information of the first file.

The migration module 1402 is configured to pull data of the first file from a device storing the data of the first file to the second storage device when the ownership information of the first file indicates that a storage device to which the first file belongs is the second storage device and the storage layout information of the first file indicates that a storage device storing the first file does not include the second storage device.

In another possible implementation, the computing apparatus 140 further includes a metadata update module 1403. The metadata update module 1403 is further configured to:
perform a first change on the metadata of the first file, where the first change indicates to add the second storage device to the storage device indicated by the storage layout information of the first file.

In still another possible implementation, the ownership information of the first file is an identifier of the second storage device. Before the first change, the storage layout information of the first file does not include the identifier of the second storage device.

The metadata update module 1403 is further configured to:
add the identifier of the second storage device to the storage layout information of the first file.

In still another possible implementation, the storage layout information of the first file indicates that the storage device storing the first file includes a first storage device. The computing apparatus 140 further includes a communication module 1404. The communication module 1404 is configured to:
send a pull request for the first file, where the pull request indicates a first computing device to push the first file, and the first computing device is located in the first storage device or is connected to the first storage device.

In still another possible implementation, the storage layout information of the first file indicates that the storage device storing the first file includes a shared storage area. The migration module 1402 is configured to:
pull the data of the first file from the shared storage area to the second storage device.

In still another possible implementation, the storage layout information of the first file indicates that the storage device storing the first file includes a first storage device. The migration module 1402 is further configured to:
pull the data of the first file from the first storage device to the second storage device.

In still another possible implementation, the first file belongs to a target file system. The metadata of the first file is included in metadata of the target file system. The metadata of the target file system is stored in a global data service.

The metadata obtaining module 1401 is further configured to:
obtain current metadata of the first file from the global metadata service.

In still another possible implementation, the metadata of the target file system is a streaming structure and includes a plurality of metadata records. Each metadata record includes an identifier of one node and an attribute of the node. The node is a file or a directory. The attribute of the node includes ownership information of the node and storage layout information of the node. The performing a first change on the metadata of the first file includes:
appending a first metadata record to an end of the metadata of the target file system, where the first metadata record includes an identifier of the first file and the storage layout information of the first file, and the storage layout information of the first file includes the identifier of the second storage device.

In still another possible implementation, the computing apparatus 140 further includes a view providing module 1406. The view providing module is configured to provide a local file view of the first storage device. The local file view indicates a hierarchy of a plurality of files stored in the first storage device. Storage layout information of the plurality of files indicates the first storage device.

In still another possible implementation, the computing apparatus 140 further includes a view providing module 1406. The view providing module is configured to provide an ownership file view of the first storage device. The ownership local file view includes information about a plurality of files, and ownership information of the plurality of files indicates the first storage device.

In still another possible implementation, a file belonging to the first storage device and a file belonging to the second storage device constitute a global file system in a manner of federation. The computing apparatus further includes a view providing module 1406. The view providing module 1406 is configured to provide a global file view. The global file view includes information about a file belonging to the first storage device and information about a file belonging to the second storage device.

In a possible design, the computing apparatus 140 may include a communication module 1404, a migration module 1402, and a metadata update module 1403. The computing apparatus 140 is configured to implement the method on the side of the first storage device in the embodiment shown in FIG. 12.

In a possible implementation, the communication module 1404 is configured to receive a pull request for a first file from a second computing device. The second computing device is connected to a second storage device.

The migration module 1402 is configured to pushing data of the first file to a shared storage area.

The metadata update module 1403 is configured to perform a first change on metadata of the first file, to trigger the second computing device to obtain the data of the first file from the shared storage area and store the data into the second storage device. The first change indicates to add the shared storage area to a storage device indicated by storage layout information of the first file. After the first change, the storage layout information of the first file indicates that the storage device storing the first file includes the first storage device and the shared storage area and does not include the second storage device.

In still another possible implementation, ownership information of the first file is an identifier of the second storage device. Before the first change, the storage layout information of the first file includes an identifier of the first storage device and does not include the identifier of the second storage device.

The metadata update module 1403 is further configured to:
add an identifier of the shared storage area to the storage layout information of the first file.

In still another possible implementation, the first file belongs to a target file system. The metadata of the first file is included in metadata of the target file system. The metadata of the target file system is synchronized between a plurality of devices. The plurality of devices include a first computing device.

In still another possible implementation, the communication module 1404 is further configured to:
send a first notification, where the first notification indicates that the metadata of the first file is changed.

In still another possible implementation, the metadata of the target file system is a streaming structure and includes a plurality of metadata records. Each metadata record includes an identifier of one node and an attribute of the node. The node is a file or a directory. The attribute of the node includes ownership information of the node and storage layout information of the node.

The metadata update module 1403 is configured to:
append a first metadata record to an end of the metadata of the target file system, where the first metadata record includes an identifier of the first file and the storage layout information of the first file, and the storage layout information of the first file indicates that the storage device storing the first file includes the first storage device and the shared storage area.

In still another possible implementation, the computing apparatus 140 includes a metadata obtaining module 1401. The metadata obtaining module 1401 obtains metadata that is of the first file and that is obtained through a second change.

In still another possible implementation, the computing apparatus 140 includes a deletion control module 1405. The deletion control module 1405 is configured to delete the data of the first file from the first storage device when the metadata that is of the first file and that is obtained through the second change is obtained. The second change indicates a change of the storage layout information of the first file. After the second change, the storage layout information of the first file indicates that the storage device storing the first file includes the first storage device and includes the second storage device.

The metadata update module 1403 is configured to perform a third change on the metadata of the first file. The third change indicates to delete the first storage device from the storage device indicated by the storage layout information of the first file. After the third change, the storage layout information of the first file indicates that the storage device storing the first file does not include the first storage device.

In still another possible implementation, the deletion control module 1405 is further configured to:
mark the data of the first file as deletable, so that when the data of the first file is in a deletable state, an operation of deleting the first file is performed.

In still another possible implementation, the computing apparatus 140 further includes a view providing module 1406. The view providing module 1406 is configured to provide an ownership file view of the first storage device. The ownership local file view includes information about a plurality of files, and ownership information of the plurality of files indicates the first storage device.

In still another possible implementation, a file belonging to the first storage device and a file belonging to the second storage device belong to a global file system. The computing apparatus 140 further includes a view providing module 1406. The view providing module is configured to provide a global file view. The global file view includes information about a file belonging to the first storage device and information about a file belonging to the second storage device.

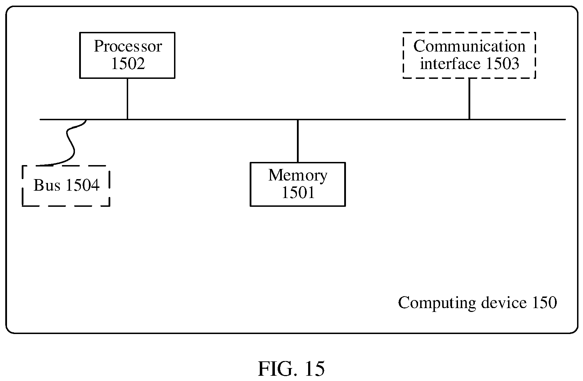

FIG. 15 is a diagram of a structure of a computing device 150 according to an embodiment of this application. The computing device 150 is a device having a computing capability. The device herein may be a physical device, for example, a controller, a processor, a server (for example, a rack server), or a host, or may be a virtual device, for example, a virtual machine or a container.

As shown in FIG. 15, the computing device 150 includes a processor 1502 and a memory 1501, and optionally includes a bus 1504 and a communication interface 1503. The processor 1502 communicates with the memory 1501 and the like through the bus 1504. It should be understood that quantities of processors and memories in the computing device 150 are not limited in this application.

The memory 1501 is configured to provide storage space. The storage space may optionally store application data, user data, an operating system, a computer program, and the like. The memory 1501 may include a volatile memory (volatile memory), for example, a random access memory (random access memory, RAM). The memory 1501 may further include a non-volatile memory (non-volatile memory), for example, a read-only memory (read-only memory, ROM), a flash memory, a hard disk drive (hard disk drive, HDD), or a solid state drive (solid state drive, SSD).

The processor 1502 is a module for performing an operation, and may include any one or more of a controller (for example, a storage controller), a central processing unit (central processing unit, CPU), a micro graphics processing unit (graphics processing unit, GPU), a microprocessor (microprocessor, MP), a digital signal processor (digital signal processor, DSP), a coprocessor (assisting the central processing unit in completing corresponding processing and application), an application-specific integrated circuit (Application-Specific Integrated Circuit, ASIC), a microcontroller unit (Microcontroller Unit, MCU), a virtual machine, a container, and the like.

The communication interface 1503 is configured to provide an information input or output for the at least one processor, and/or the communication interface 1503 may be configured to receive data sent from the outside and/or send data to the outside. The communication interface 1503 may be a wired link interface including, for example, an ethernet cable, or may be a wireless link (Wi-Fi, Bluetooth, universal wireless transmission, or another wireless communication technology) interface. Optionally, the communication interface 1503 may further include a transmitter (for example, a radio frequency transmitter or an antenna), a receiver, or the like coupled to the interface.

The bus 1504 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 15, but this does not mean that there is only one bus or only one type of bus. The bus 1504 may include a path for transmitting information between components (for example, the memory 1501, the processor 1502, and the communication interface 1503) of the computing device 150.

In an embodiment of this application, the memory 1501 stores executable instructions. The processor 1502 executes the executable instructions to implement the foregoing data migration method, for example, the data migration method in the embodiment in FIG. 8, FIG. 10, FIG. 12, or the like. In other words, the memory 1501 stores instructions used to perform the data migration method.

An embodiment of this application further provides a computing device cluster. The computing device cluster includes at least one computing device 150. Each computing device 150 includes a processor 1502 and a memory 1501.

The processor 1502 of the at least one computing device 150 is configured to execute the instructions stored in the memory 1501 of the at least one computing device 150, to enable the computing device cluster to implement the foregoing data migration method, for example, the data migration method in the embodiment in FIG. 8, FIG. 10, FIG. 12, or the like. Optionally, the memory stores the instructions used to perform the data migration method.

An embodiment of this application further provides a storage device. The storage device includes a storage disk, and the computing apparatus shown in FIG. 14 or the computing device shown in FIG. 15. The storage disk is configured to provide space for storing data of a file. The computing apparatus or the computing device is configured to implement the foregoing data migration method, for example, the method on the side of the first storage device and/or the method on the side of the second storage device in the embodiment in FIG. 8, FIG. 10, FIG. 12, or the like.

It should be understood that, for related descriptions of the storage device, refer to the descriptions of the first computing device and the second computing device in the implementations in FIG. 1, FIG. 2, FIG. 3, FIG. 4, or the like.

In some scenarios, the storage device may be a storage product provided by a storage vendor. For example, the storage device may include a storage product Dorado or Pacific provided by Huawei.

An embodiment of this application provides a computer-readable storage medium. The computer-readable storage medium stores instructions. When the instructions are run on at least one processor, the foregoing data migration method, for example, the data migration method in the embodiment in FIG. 8, FIG. 10, FIG. 12, or the like, is implemented.

The computer-readable storage medium may be any usable medium that can be stored by a computing device, or a data storage device like a data center including one or more usable media. The computer-readable storage medium may be a magnetic medium (for example, a floppy disk, a hard disk, or a magnetic tape), an optical medium (for example, a DVD), a semiconductor medium (for example, a solid state drive), or the like.

This application provides a computer program product. The computer program product includes computer instructions. When the instructions are run on at least one processor, the foregoing data migration method, for example, the data migration method in the embodiment in FIG. 8, FIG. 10, FIG. 12, or the like, is implemented.

Optionally, the computer program product may be a software installation package or an image package. When the foregoing method needs to be used, the computer program product may be downloaded, and the computer program product is executed on a computing device.

In embodiments of this application, a term like "example" or "for example" is used to represent giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between associated objects.

In addition, unless otherwise stated, ordinal numbers such as "first" and "second" in the embodiments of this application are used to distinguish between a plurality of objects, but are not intended to limit an order, a time sequence, priorities, or importance of the plurality of objects. For example, a first storage device and a second storage device are merely for ease of description, but do not indicate differences in apparatus structures, deployment sequences, importance degrees, and the like of the first storage device and the second storage device.

Persons of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A data migration method, wherein the method comprises:
determining a migration task for a first file, wherein data of the first file is stored in a first storage device, and the migration task for the first file indicates to migrate the data of the first file from the first storage device to a second storage device; and metadata of the first file comprises ownership information of the first file and storage layout information of the first file, the ownership information of the first file indicates that a storage device to which the first file belongs is the first storage device, and the storage layout information of the first file indicates that a storage device storing the first file comprises the first storage device and does not comprise the second storage device; and
performing a first change on the metadata of the first file, to trigger execution of the migration task for the first file, wherein the first change indicates to change, from the first storage device to the second storage device, the storage device to which the first file belongs.

2. The method according to claim 1, wherein the ownership information of the first file is an identifier of the first storage device, and the storage layout information of the first file comprises the identifier of the first storage device and does not comprise an identifier of the second storage device; and
the performing a first change on the metadata of the first file comprises:
changing the ownership information of the first file from the identifier of the first storage device to the identifier of the second storage device.

3. The method according to claim 1 or 2, wherein the migration task for the first file comprises an identifier of the first file, the identifier of the first storage device, and the identifier of the second storage device.

4. The method according to any one of claims 1 to 3, wherein the method is performed by a migration scheduling apparatus, the first file belongs to a target file system, the metadata of the first file is comprised in metadata of the target file system, the metadata of the target file system is synchronized between a plurality of devices, and the plurality of devices comprise the migration scheduling apparatus, a first computing device, and a second computing device; and the first computing device is located in the first storage device or is connected to the first storage device, and the second computing device is located in the second storage device or is connected to the second storage device.

5. The method according to claim 4, wherein after the performing a first change on the metadata of the first file, the method further comprises:
sending a first notification, wherein the first notification indicates that the metadata of the first file is changed, so that the first computing device or the second computing device obtains, based on the first notification, metadata that is of the first file and that is obtained through the first change, and executes the migration task for the first file based on the metadata that is of the first file and that is obtained through the first change.

6. The method according to claim 4 or 5, wherein after execution of the migration task for the first file is triggered, the method further comprises:
obtaining metadata that is of the first file and that is obtained through a second change, wherein the second change is performed by the first computing device or the second computing device, and the second change indicates a change of the storage layout information of the first file; and
determining migration progress of the first file based on the metadata that is of the first file and that is obtained through the second change.

7. The method according to claim 6, wherein before the obtaining metadata that is of the first file and that is obtained through a second change, the method further comprises:
receiving a second notification, wherein the second notification indicates that the metadata of the first file is changed.

8. The method according to claim 7, wherein the migration scheduling apparatus, the first computing device, and the second computing device all maintain the metadata of the target file system; and
the obtaining metadata that is of the first file and that is obtained through a second change comprises:
obtaining, based on the second notification, the metadata that is of the first file and that is obtained through the second change, wherein the second notification comprises content of the second change, or the second notification comprises the metadata that is of the first file and that is obtained through the second change.

9. The method according to claim 7, wherein the migration scheduling apparatus, the first computing device, and the second computing device all maintain the metadata of the target file system; and
the obtaining metadata that is of the first file and that is obtained through a second change comprises:
sending, to the first computing device or the second computing device, a request used to obtain changed metadata of the first file; and
obtaining, based on a response of the first computing device or the second computing device to the request, the metadata that is of the first file and that is obtained through the second change.

10. The method according to claim 6 or 7, wherein the metadata of the target file system is stored in a global metadata service and is synchronized between the plurality of devices by using the global metadata service; and
the obtaining metadata that is of the first file and that is obtained through a second change comprises:
obtaining, from the global metadata service, the metadata that is of the first file and that is obtained through the second change.

11. The method according to any one of claims 4 to 7 and 10, wherein the metadata of the target file system is stored in the global metadata service and is synchronized between the plurality of devices by using the global metadata service; and
the performing a first change on the metadata of the first file comprises:
implementing the first change through a service interface provided by the global metadata service.

12. The method according to claim 10 or 11, wherein the global metadata service is located in any one of the plurality of devices, or is located in any device other than the plurality of devices.

13. The method according to any one of claims 4 to 12, wherein the metadata of the target file system is a streaming structure and comprises a plurality of metadata records, each metadata record comprises an identifier of one node and an attribute of the node, the node is a file or a directory, and the attribute of the node comprises ownership information of the node and storage layout information of the node; and
the performing a first change on the metadata of the first file comprises:
appending a first metadata record to an end of the metadata of the target file system, wherein the first metadata record comprises the identifier of the first file and changed ownership information of the first file, and the changed ownership information of the first file indicates that the storage device to which the first file belongs is the second storage device.

14. The method according to any one of claims 1 to 13, wherein the determining a migration task for a first file comprises:
determining the migration task for the first file based on external event information, wherein
the external event information comprises one or more of the following information: a network connection status, a device health status, and a person transfer status related to the first file.

15. The method according to any one of claims 1 to 14, wherein the determining a migration task for a first file comprises:
determining the migration task for the first file based on an analysis result of the metadata of the first file, wherein the analysis result comprises one or more of the following information: a cold or hot state of the first file, security of the first file, and a service related to the first file.

16. The method according to any one of claims 1 to 15, wherein the determining a migration task for a first file comprises:
determining the migration task for the first file according to a migration indication that is input by a user and that is for the first file.

17. The method according to any one of claims 1 to 16, wherein the method further comprises:
determining a migration task for a second file; and
orchestrating an execution sequence of the migration task for the first file and the migration task for the second file.

18. A data migration method, applied to a first computing device, wherein the first computing device is located in a first storage device or is connected to a first storage device, the first storage device stores data of a first file, and the method comprises:
obtaining metadata of the first file, wherein the metadata of the first file comprises ownership information of the first file and storage layout information of the first file; and
migrating the data of the first file from the first storage device to a second storage device when determining that a storage device indicated by the ownership information of the first file is the second storage device and the storage layout information of the first file indicates that a storage device storing the first file does not comprise the second storage device but comprises the first storage device.

19. The method according to claim 18, wherein the first file belongs to a target file system, the metadata of the first file is comprised in metadata of the target file system, the metadata of the target file system is synchronized between a plurality of devices, and the plurality of devices comprise the first computing device.

20. The method according to claim 19, wherein the metadata of the target file system is stored in a global metadata service and is synchronized between the plurality of devices by using the global metadata service; and
the obtaining metadata of the first file comprises:
obtaining current metadata of the first file from the global metadata service.

21. The method according to any one of claims 18 to 20, wherein the migrating the data of the first file from the first storage device to a second storage device comprises:
pushing the data of the first file to a shared storage area, wherein the shared storage area is connected to the first computing device and a second computing device, and the second computing device is located in the second storage device or is connected to the second storage device; and
performing a first change on the metadata of the first file, to trigger the second computing device to obtain the data of the first file from the shared storage area and store the data into the second storage device, wherein the first change indicates to add the shared storage area to the storage device indicated by the storage layout information of the first file; and after the first change, the storage layout information of the first file indicates that the storage device storing the first file comprises the first storage device and the shared storage area and does not comprise the second storage device.

22. The method according to claim 21, wherein the ownership information of the first file is an identifier of the second storage device, and before the first change, the storage layout information of the first file comprises an identifier of the first storage device and does not comprise the identifier of the second storage device; and
the performing a first change on the metadata of the first file comprises:
adding an identifier of the shared storage area to the storage layout information of the first file.

23. The method according to claim 21 or 22, wherein before the obtaining metadata of the first file, the method further comprises:
receiving a first notification, wherein the first notification indicates that the metadata of the first file is changed; and
after the performing a first change on the metadata of the first file, the method further comprises:
sending a second notification, wherein the first notification indicates that the metadata of the first file is changed.

24. The method according to any one of claims 12 to 17, wherein the method further comprises:
deleting the data of the first file from the first storage device when obtaining metadata that is of the first file and that is obtained through a second change, wherein the second change indicates a change of the storage layout information of the first file, and after the second change, the storage layout information of the first file indicates that the storage device storing the first file comprises the first storage device and comprises the second storage device; and
performing a third change on the metadata of the first file, wherein the third change indicates to delete the first storage device from the storage device indicated by the storage layout information of the first file; and after the third change, the storage layout information of the first file indicates that the storage device storing the first file does not comprise the first storage device.

25. The method according to claim 24, wherein before the deleting the first file from the first storage device, the method further comprises:
marking the data of the first file as deletable, so that when the data of the first file is in a deletable state, an operation of deleting the first file is performed.

26. The method according to any one of claims 18 to 25, wherein the method further comprises:
providing a local file view of the first storage device, wherein the local file view indicates a hierarchy of a plurality of files stored in the first storage device, and storage layout information of the plurality of files indicates the first storage device.

27. A data migration method, applied to a second computing device, wherein the second computing device is located in a second storage device or is connected to a second storage device, and the method comprises:
obtaining metadata of a first file, wherein the metadata of the first file comprises ownership information of the first file and storage layout information of the first file; and
pulling data of the first file from a device storing the data of the first file to the second storage device when the ownership information of the first file indicates that a storage device to which the first file belongs is the second storage device and the storage layout information of the first file indicates that the storage device storing the first file does not comprise the second storage device.

28. The method according to claim 27, wherein the method further comprises:
performing a first change on the metadata of the first file, wherein the first change indicates to add the second storage device to the storage device indicated by the storage layout information of the first file.

29. The method according to claim 27 or 28, wherein the storage layout information of the first file indicates that the storage device storing the first file comprises a first storage device, and before the pulling data of the first file from a device storing the data of the first file to the second storage device, the method further comprises:
sending a pull request for the first file, wherein the pull request indicates a first computing device to push the first file, and the first computing device is located in the first storage device or is connected to the first storage device.

30. The method according to any one of claims 27 to 29, wherein the storage layout information of the first file indicates that the storage device storing the first file comprises a shared storage area, and the pulling data of the first file from a device storing the data of the first file to the second storage device comprises:
pulling the data of the first file from the shared storage area to the second storage device.

31. The method according to any one of claims 27 to 30, wherein the first file belongs to a target file system, the metadata of the first file is comprised in metadata of the target file system, and the metadata of the target file system is stored in a global metadata service; and
the obtaining metadata of a first file comprises:
obtaining current metadata of the first file from the global metadata service.

32. A migration scheduling apparatus, wherein the migration scheduling apparatus comprises a task determining module and a metadata update module, and the migration scheduling apparatus is configured to implement the method according to any one of claims 1 to 17.

33. A computing apparatus, wherein the computing apparatus comprises a metadata obtaining module and a migration module, and the migration scheduling apparatus is configured to implement the method according to any one of claims 18 to 26, or is configured to implement the method according to any one of claims 27 to 31.

34. A migration scheduling apparatus, wherein the migration scheduling apparatus comprises a processor and a memory; and
the processor is configured to execute instructions stored in the memory, to enable a computing device to implement the method according to any one of claims 1 to 17.

35. A computing device, wherein the computing device comprises a processor and a memory, the memory stores computer instructions, and the processor is configured to invoke the computer instructions stored in the memory, to implement the method according to any one of claims 18 to 26.

36. A storage device, wherein the storage device comprises the computing device according to claim 35 and a storage disk connected to the computing device.

37. A computing device, wherein the computing device comprises a processor and a memory, the memory stores computer instructions, and the processor is configured to invoke the computer instructions stored in the memory, to implement the method according to any one of claims 27 to 31.

38. A storage device, wherein the storage device comprises the computing device according to claim 37 and a storage disk connected to the computing device.

39. A data migration system, wherein the data migration system comprises the storage device according to claim 36 and the storage device according to claim 38.

40. The data migration system according to claim 39, wherein the data migration system further comprises the migration scheduling apparatus according to claim 34.

41. A computer-readable storage medium, comprising computer program instructions, wherein when the computer program instructions are executed by a processor, the method according to any one of claims 1 to 17 is implemented, the method according to any one of claims 18 to 26 is implemented, or the method according to any one of claims 27 to 31 is implemented.
